# EUROPÄISCHE PATENTSCHRIFT

(11) **EP 3 507 082 B1**
(45) Veröffentlichungstag und Bekanntmachung des Hinweises auf die Patenterteilung: **04.08.2021**
(21) Anmeldenummer: 17757539.6
(22) Anmeldetag: 24.08.2017
(51) Int. Cl.: B29C 65/10, B29C 65/82, B29L 9/00, B29C 65/08

(54) **VORRICHTUNG UND VERFAHREN ZUM HERSTELLEN VON VERPACKUNGSVORLÄUFERN MITTELS EINER AM RANDBEREICH DES VERPACKUNGSVORLÄUFERS EINWIRKENDEN ERHITZUNGSEINRICHTUNG**
DEVICE AND METHOD FOR PRODUCING PACKAGING PRECURSORS BY MEANS OF A HEATING DEVICE ACTING ON THE EDGE AREA OF THE PACKAGING PRECURSOR
DISPOSITIF ET PROCÉDÉ DE PRODUCTION DE PRÉCURSEURS D'EMBALLAGE AU MOYEN D'UN DISPOSITIF DE CHAUFFAGE AGISSANT AU NIVEAU D'UNE ZONE DE BORDURE DU PRÉCURSEUR D'EMBALLAGE

(30) Priorität: 31.08.2016 DE 102016216460
(43) Veröffentlichungstag der Anmeldung: 10.07.2019
(73) Patentinhaber: SIG Technology AG, 8212 Neuhausen am Rheinfall (CH)
(72) Erfinder: ALEF, Ulrich, 41844 Wegberg (DE); THOMAS, Martin, 41836 Hückelhoven (DE); LEUFEN, Richard, 52441 Linnich (DE)
(74) Vertreter: Herzog IP Patentanwalts GmbH
(86) Internationale Anmeldenummer: PCT/EP2017/071308
(87) Internationale Veröffentlichungsnummer: WO 2018/041706

(56) Entgegenhaltungen:
- DE-C1- 19 741 340
- FR-A1- 2 459 724
- JP-A- H09 141 763
- JP-A- 2007 269 353
- JP-A- 2009 120 254
- JP-A- 2009 149 364

## Beschreibung

Die Erfindung betrifft allgemein eine Vorrichtung zur Herstellung eines Verpackungsvorläufers, wobei der Verpackungsvorläufer zu mindestens 80 Gew.-%, bezogen auf den Verpackungsvorläufer, aus einem flächenförmigen Verbund besteht, wobei der flächenförmige Verbund beinhaltet:
i. eine Verbundkunststoffschicht,
ii. eine Verbundträgerschicht,
iii. einen ersten Verbundrandbereich,
iv. einen zweiten Verbundrandbereich,
wobei die Vorrichtung als Vorrichtungsbestandteile entlang einer Stromrichtung beinhaltet:
a) eine ebene Transporteinrichtung ausgebildet zum Transportieren des ebenen flächenförmigen Verbunds, wobei die Transporteinrichtung eine Transportoberfläche, ausgebildet zum Tragen des Verbunds beinhaltet; stromab davon
b) eine erste Erhitzungseinrichtung ausgebildet zum Erhitzen des ersten Verbundrandbereichs, wobei die erste Erhitzungseinrichtung Energieabgabesegmente beinhaltet; stromab davon
c) eine Kontaktierungseinrichtung ausgebildet zum Verbinden des ersten Verbundrandbereich mit dem zweiten Verbundrandbereich;
wobei die erste Erhitzungseinrichtung zur Abgabe von Energie entlang der Stromrichtung ausgebildet ist, wobei die erste Erhitzungseinrichtung entlang der Stromrichtung ein erstes Energieabgabesegment und entlang der Stromrichtung ein am weitesten von dem ersten Energieabgabesegment entferntes letztes Energieabgabesegment beinhaltet, wobei das erste Energieabgabesegment zur Abgabe einer höheren Heizleistung als das letzte Energieabgabesegment ausgebildet ist. Ferner betrifft die Erfindung ein Verfahren und eine Verwendung der Vorrichtung.

Seit langer Zeit erfolgt die Konservierung von Nahrungsmitteln, seien es Nahrungsmittel für den menschlichen Verzehr oder auch Tiernahrungsprodukte, in dem diese entweder in einer Dose oder in einem mit einem Deckel verschlossenen Glas gelagert werden. Hierbei kann die Haltbarkeit zum einen dadurch erhöht werden, in dem jeweils das Nahrungsmittel und der Behälter, hier Glas bzw. Dose, getrennt möglichst weitestgehend entkeimt werden und dann das Nahrungsmittel in den Behälter gefüllt und dieser verschlossen wird. Diese an sich über eine lange Zeit bewährten Maßnahmen zur Erhöhung der Haltbarkeit von Nahrungsmittel haben jedoch eine Reihe von Nachteilen, beispielsweise eine nochmals notwendige nachgelagerte Entkeimung. Dosen und Gläser haben aufgrund ihrer im Wesentlichen zylindrischen Form den Nachteil, dass eine sehr dichte und platzsparende Lagerung nicht möglich ist. Zudem haben Dosen und Gläser ein erhebliches Eigengewicht, das zu einem erhöhten Energieaufwand beim Transport führt. Außerdem ist zur Herstellung von Glas, Weißblech oder Aluminium, selbst wenn die hierzu verwendeten Rohstoffe aus dem Recycling stammen, ein recht hoher Energieaufwand notwendig. Bei Gläsern kommt erschwerend ein erhöhter Transportaufwand hinzu. Die Gläser werden meist in einer Glashütte vorgefertigt und müssen dann unter Nutzen erheblicher Transportvolumina zu dem das Nahrungsmittel abfüllenden Betrieb transportiert werden. Darüber hinaus lassen sich Gläser und Dosen nur mit einem erheblichen Kraftaufwand oder unter Zuhilfenahme von Werkzeugen und damit eher umständlich öffnen. Bei Dosen kommt eine hohe Verletzungsgefahr durch scharfe, beim Öffnen entstehende Kanten hinzu. Bei Gläsern kommt es immer wieder dazu, dass beim Füllen oder Öffnen der gefüllten Gläser Glassplitter in das Nahrungsmittel gelangen, die schlimmstenfalls zu inneren Verletzungen beim Verzehr des Nahrungsmittels führen können. Zudem müssen sowohl Dosen als auch Gläser zur Kennzeichnung und Bewerbung des Nahrungsmittelinhalts mit Etiketten beklebt werden. Die Gläser und Dosen können nicht ohne weiteres direkt mit Informationen und Werbedarstellungen bedruckt werden. Zusätzlich zu dem eigentlichen Druck sind also ein Substrat dafür, ein Papier oder eine geeignete Folie, sowie ein Befestigungsmittel, ein Klebe- oder ein Siegelmittel, notwendig.

Im Stand der Technik sind formstabile Nahrungsmittelbehälter aus mehrschichtigen Laminaten, hier auch als flächenförmige Verbünde bezeichnet, bekannt. Die Formstabilität des Behälters wird dabei dadurch erzielt, dass das Laminat eine Verbundträgerschicht, welche oft aus Karton oder Pappe besteht, beinhaltet. In solchen Nahrungsmittelbehältern können Nahrungsmittel über einen langen Zeitraum möglichst ohne Beeinträchtigungen gelagert werden. Typischerweise sind die flächenförmigen Verbunde aufgebaut aus der meist aus Karton oder Papier bestehenden Verbundträgerschicht, einer Haftvermittlerschicht, einer Barriereschicht und einer weiteren Kunststoffschicht, wie unter anderem in WO 90/09926 A2 offenbart. Üblicherweise sind die oben beschriebenen Behälter auf ihrer Außenseite mit einem gedruckten Dekor versehen. Hierdurch können für den Verbraucher des vom Behälter beinhalteten Nahrungsmittels relevante Informationen, wie zum Beispiel Inhaltsstoffe des Nahrungsmittels, direkt auf dem Behälter zur Verfügung gestellt werden. Ferner dient das Dekor Werbezwecken und der Gestaltung einer ansprechenden Produkterscheinung. Im Stand der Technik wird das Dekor durch ein Tiefdruckverfahren vor dem Falten auf das Laminat aufgebracht.

Hinsichtlich der Herstellung derartiger Verbundverpackungen sowie der Durchführung des Füllvorganges sind im Wesentlichen zwei unterschiedliche Verfahren bekannt. Gemäß einem Verfahren wird in einer Füllmaschine aus einem flächenförmigen Verbund über den Zwischenschritt eines Schlauchs, der mit Nahrungsmittel gefüllt wird, der geschlossene Behälter hergestellt. Gemäß einer anderen Ausführungsform werden zunächst durch Falten und Siegeln bestimmter Bereiche des flächenförmigen Verbundes bereits mit einer Längsnaht versehene Verpackungsvorläufer erhalten. Anschließend werden die Verpackungsvorläufer zur Fülleinrichtung transportiert. Die Herstellung der Verpackungsvorläufer erfolgt mit äußerst großer Geschwindigkeit, damit hohe Produktionsraten pro Zeiteinheit erreicht werden.

Im Stand der Technik lehrt JP 2007 269353 A einen Längsdichtungsband-Versiegelungsmechanismus, einen Längsversiegelungsmechanismus und eine Behälterformvorrichtung, die in der Lage ist, die erforderliche Heißsiegelfestigkeit zu gewährleisten. Ferner betrifft DE 197 41 340 C1 ein Verfahren zum Herstellen eines mit einem aushärtbaren Harz imprägnierbaren Schlauches für die Auskleidung von Rohrleitungen und Kanalsystemen. JP 2009 120254 A offenbart eine Füllmaschine, die eine kontinuierliche Überwachung einer Oberflächentemperatur eines Längsnahtabschnitts ermöglicht. Ferner offenbart JP 2009 149364 A eine Füllmaschine, die die Heiztemperatur einer Vorheizeinheit regeln kann. Weiterhin betrifft FR 2 459 724 A1 einen Papierbehälter, umfassend einen hohlen Körperabschnitt mit einer thermoplastischen Kunstharzschicht als innerster Schicht, wobei ein Längsende des Materialzuschnitts, aus dem der Papierbehälter hergestellt ist, über eine vorbestimmte Breite auf im Wesentlichen die Hälfte seiner Dicke abgeschält worden ist, eine Längsrillung, die im Wesentlichen in der Mitte des abgeschälten Abschnitts gebildet ist, und wobei der abgeschälte Abschnitt um die Rillung gefaltet und an sich selbst angeklebt worden ist, wobei der Körperabschnitt durch Zusammenkleben der beiden Längsenden des Zuschnitts in überlappender Weise mit dem gefalteten Längsende innerhalb des anderen Längsendes gebildet wird. Schließlich offenbart JP H09 141763 A ein Verfahren zum thermischen Verschmelzen einer Verbundfläche A, die aus einem Polyolefinharz-PE-Teil und einem Polyesterharz-PET-Teil besteht, und einer Polyesterharz-Fläche B, der die Verbundfläche gegenüberliegt, wobei der Polyolefinharz-PE-Teil und die Polyesterharz-PET-Fläche, der der Polyolefinharz-PE-Teil gegenüberliegt, durch ein Flammverfahren oder ein Koronaverfahren behandelt werden. Darüber hinaus werden die beiden Seiten der Verbundwerkstoff-Oberfläche A und die Polyesterharz-Oberfläche B, der die Verbundwerkstoff-Oberfläche A gegenüberliegt, vollständig mit Heißluft behandelt und dann unter Druck zusammengefügt und thermisch miteinander verschmolzen.

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, eine Vorrichtung für die Herstellung von Verpackungsvorläufer für Nahrungsmittelbehälter bereitzustellen, die sich durch hohe Produktionsgeschwindigkeiten und eine verbesserte Verarbeitbarkeit auszeichnet. Eine weitere Aufgabe der Erfindung ist es, eine Vorrichtung für die Herstellung von Verpackungsvorläufer für Nahrungsmittelbehälter bereitzustellen, der in der Verpackungsvorläuferproduktion zu weniger Fehlern führt. Eine weitere Aufgabe der Erfindung ist es, eine Vorrichtung für die Herstellung von Verpackungsvorläufer bereitzustellen, wobei der Einsatz dieser Vorrichtung dazu führt, dass sich die Längsnaht der Verpackungsvorläufer durch eine hohe Nahtfestigkeit der Innensiegelung auszeichnet. Eine weitere Aufgabe der Erfindung ist es, eine Vorrichtung für die Herstellung von Verpackungsvorläufer bereitzustellen, wobei der Einsatz dieser Vorrichtung dazu führt, dass sich die Längsnaht der Verpackungsvorläufer durch eine hohe Nahtfestigkeit der Außensiegelung auszeichnet. Eine weitere Aufgabe der Erfindung ist es, eine Vorrichtung für die Herstellung von Verpackungsvorläufer bereitzustellen, wobei der Einsatz dieser Vorrichtung dazu führt, dass die aus den Verpackungsvorläufern hergestellten Behälter nach dem Füllprozess in der Füllmaschine weniger durch Keime belastet sind. Eine erfindungsgemäße Aufgabe liegt auch darin, ein Verfahren bereitzustellen, das einen Beitrag zu der Lösung der vorstehend im Zusammenhang mit der erfindungsgemäßen Vorrichtung angesprochenen Aufgaben leistet. Es ist auch eine Aufgabe der Erfindung, ein Verfahren bereitzustellen, welches sich durch einen reduzierten Energieaufwand während der Herstellung der Verpackungsvorläufer auszeichnet. Weiterhin ist es auch eine Aufgabe der Erfindung, ein Verfahren bereitzustellen, welches sich durch hohe Herstellungsgeschwindigkeiten auszeichnet. Auch ist es eine Aufgabe der Erfindung einen Verpackungsvorläufer bereitzustellen, dessen Längsnaht sich durch eine hohe Nahtfestigkeit sowohl in der Innensiegelung als auch in der Außensiegelung auszeichnet. Eine oder auch mehrere der vorstehenden Aufgaben stellen sich auch im Zusammenhang mit der Verwendung der erfindungsgemäßen Vorrichtung.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Ausführungsform 1 einer Vorrichtung zur Herstellung eines Verpackungsvorläufers, wobei der Verpackungsvorläufer zu mindestens 80 Gew.-%, bezogen auf den Verpackungsvorläufer, aus einem flächenförmigen Verbund besteht, wobei der flächenförmige Verbund beinhaltet:
i. eine Verbundkunststoffschicht,
ii. eine Verbundträgerschicht,
iii. einen ersten Verbundrandbereich,
iv. einen zweiten Verbundrandbereich,
wobei die Vorrichtung als Vorrichtungsbestandteile entlang einer Stromrichtung beinhaltet:
a) eine ebene Transporteinrichtung ausgebildet zum Transportieren des ebenen flächenförmigen Verbunds, wobei die Transporteinrichtung eine Transportoberfläche, ausgebildet zum Tragen des Verbunds beinhaltet; stromab davon
b) eine erste Erhitzungseinrichtung ausgebildet zum Erhitzen des ersten Verbundrandbereichs, wobei die erste Erhitzungseinrichtung Energieabgabesegmente beinhaltet; stromab davon
c) eine Kontaktierungseinrichtung ausgebildet zum Verbinden des ersten Verbundrandbereich mit dem zweiten Verbundrandbereich;
wobei die erste Erhitzungseinrichtung zur Abgabe von Energie entlang der Stromrichtung ausgebildet ist.

Die erste Erhitzungseinrichtung beinhaltet entlang der Stromrichtung ein erstes Energieabgabesegment und entlang der Stromrichtung ein am weitesten von dem ersten Energieabgabesegment entferntes letztes Energieabgabesegment. Bevorzugt wird die erste Erhitzungseinrichtung aus Metall, vorzugsweise mit einem Eisengehalt von mindestens 80 Gew.-%, bezogen auf das Metall, ausgebildet. Ein bevorzugtes Metall ist Edelstahl
Das erste Energieabgabesegment ist zur Abgabe einer höheren Heizleistung als das letzte Energieabgabesegment ausgebildet. Hierbei ist es bevorzugt, dass die Differenz der Heizleistung zwischen ersten und letzten Energieabgabesegment in einem Bereich von 0,2 bis 10 kW/m, vorzugsweise in einem Bereich von 0,5 bis 9 kW/m und besonders bevorzugt in einem Bereich von 0,7 bis 8 kW/m liegt.

In einer erfindungsgemäßen Ausführungsform 2 ist die Vorrichtung nach ihrer Ausführungsform 1 ausgestaltet, wobei das erste Energieabgabesegment und das letzte Energieabgabesegment mindestens 50 cm, bevorzugt mindestens 60 cm, bevorzugter mindestens 70 cm, am bevorzugtesten mindestens 80 cm voneinander entfernt sind. Gelegentlich werden maximale Entfernungen von bis zu 600 cm gefunden.

In einer erfindungsgemäßen Ausführungsform 3 ist die Vorrichtung nach einer der Ausführungsformen 1 und 2 ausgestaltet, wobei mindestens eins, bevorzugt mindestens zwei, bevorzugter mindestens 5, am bevorzugtesten mindestens 10 Energieabgabesegmente entlang der Stromrichtung eine Länge haben, die länger ist als die Ausdehnung der Energieabgabesegmente quer zur Stromrichtung. In erfindungsgemäße Vorrichtungen ist es ebenso möglich, dass alle Energieabgabesegmente so ausgebildet sind, dass sie entlang der Stromrichtung eine Länge haben, die länger ist als die Ausdehnung der Energieabgabesegmente quer zur Stromrichtung.

In einer erfindungsgemäßen Ausführungsform 4 ist die Vorrichtung nach einer der Ausführungsformen 1 bis 3 ausgestaltet, wobei mehr als die Hälfte, bevorzugt mindestens 60 %, bevorzugter mindestens 75 %, am bevorzugtesten mindestens 99 % der Energieabgabesegmente der Transportoberfläche zugewandt sind.

In einer erfindungsgemäßen Ausführungsform 5 ist die Vorrichtung nach einer der Ausführungsformen 1 bis 4 ausgestaltet, wobei die erste Erhitzungseinrichtung eine gasdurchströmbare Eintrittsöffnung beinhaltet; wobei mindestens eines, vorzugsweise mindestens zwei und besonders bevorzugt alle der folgenden Kriterien erfüllt sind:
a) Die Eintrittsöffnung ist gegenüber der Energieabgabesegmente vorgesehen;
b) Die Eintrittsöffnung ist mit geringerem Abstand zu dem ersten Energieabgabesegment als zu dem letzten Energieabgabesegment vorgesehen;
c) Die Eintrittsöffnung besitzt eine größere Innenquerschnittsfläche als die Summe der Innenquerschnittsflächen aller Energieabgabesegmente.

Bevorzugt ist die Eintrittsöffnung mit einer Heißgasquelle verbunden. Von Vorteil ist es wenn eine Heißgasquelle das Heißgas mittels eines Gasbrenners, durch eine elektrisch betriebenen Erhitzer oder eine Kombination von beiden erzeugt.

In einer erfindungsgemäßen Ausführungsform 6 ist die Vorrichtung nach einer der Ausführungsformen 1 bis 5 ausgestaltet, wobei mehr als die Hälfte, bevorzugt mindestens 60 %, bevorzugter mindestens 75 %, am bevorzugtesten mindestens 99 % der Energieabgabesegmente als Austrittsöffnung ausgebildet sind. Bevorzugt ist dabei die Austrittsöffnung der Erhitzungseinrichtung als Schlitz ausgebildet. Bevorzugter ist die Austrittsöffnung der Erhitzungseinrichtung als mindestens zwei parallele Schlitze ausgebildet. Am bevorzugtesten ist es, wenn die Erhitzungseinrichtung eine Schlitzgruppe von mindestens zwei in Stromrichtung orientierten Schlitzen aufweist, wobei der Abstand der beiden parallelen Schlitze der Austrittsöffnung der Erhitzungseinrichtung mindestens das 10fache der Schlitzbreite beträgt.

In einer erfindungsgemäßen Ausführungsform 7 ist die Vorrichtung nach einer der Ausführungsformen 1 bis 6 ausgestaltet, wobei der Abstand zwischen Ausgangsöffnung und der Transportoberfläche höchstens so groß ist wie die Länge der Austrittsöffnungen in Stromrichtung.

In einer erfindungsgemäßen Ausführungsform 8 ist die Vorrichtung nach einer der Ausführungsformen 1 bis 7 ausgestaltet, wobei eine Schäleinrichtung, ausgebildet zum Verringern der Schichtdicke der Verbundträgerschicht im ersten Verbundrandbereich, zwischen der Transporteinrichtung und der ersten Erhitzungseinrichtung vorgesehen ist.

In einer erfindungsgemäßen Ausführungsform 9 ist die Vorrichtung nach einer der Ausführungsformen 1 bis 8 ausgestaltet, wobei einen Ionisierungseinrichtung zwischen der Erhitzungseinrichtung und der Kontaktierungseinrichtung angeordnet ist. Bevorzugt ist es, wenn zudem eine Falteinrichtung zwischen der Erhitzungseinrichtung und der Kontaktierungseinrichtung ausgebildet ist. Dieses dient vorzugsweise zum Erzeugen mindestens einer ersten Faltung des flächenförmigen Verbunds, vorzugsweise Längsfaltung entlang der längsten Ausdehnung des flächenförmigen Verbunds. Weiterhin bevorzugt ist es, wenn eine weitere Erhitzungseinrichtung zum Erhitzen des zweiten Verbundrandbereichs ausgebildet ist.

In einer erfindungsgemäßen Ausführungsform 10 ist die Vorrichtung nach einer der Ausführungsformen 1 bis 9 ausgestaltet, wobei diese den flächenförmigen Verbund beinhaltet.

Einen Beitrag zur Erfüllung mindestens einer der erfindungsgemäßen Aufgaben leistet eine Ausführungsform 1 eines Verfahrens zur Herstellung eines Verpackungsvorläufers, wobei der Verpackungsvorläufer zu mindestens 80 Gew.-%, bezogen auf den Verpackungsvorläufer, aus einem flächenförmigen Verbund besteht, das Verfahren beinhaltend als Verfahrensschritte,
a) Bereitstellen des flächenförmigen Verbunds, beinhaltend
   eine Verbundkunststoffschicht,
   eine Verbundträgerschicht,
   einen ersten Verbundrandbereich,
   einen zweiten Verbundrandbereich,
b) Beschleunigen des flächenförmigen Verbunds;
d) Erhitzen des ersten Verbundrandbereichs;
e) Verbinden des ersten Verbundrandbereichs mit dem zweiten Verbundrandbereich,
wobei das Verfahren in einer Vorrichtung durchgeführt wird, die als Vorrichtungsbestandteile entlang einer Stromrichtung beinhaltet:
a. eine ebene Transporteinrichtung ausgebildet zum Transportieren des ebenen flächenförmigen Verbunds, wobei die Transporteinrichtung eine Transportoberfläche, ausgebildet zum Tragen des Verbunds beinhaltet; stromab davon
b. eine erste Erhitzungseinrichtung ausgebildet zum Erhitzen des ersten Verbundrandbereichs, wobei die erste Erhitzungseinrichtung Energieabgabesegmente beinhaltet; stromab davon
c. eine Kontaktierungseinrichtung ausgebildet zum Verbinden des ersten Verbundrandbereich mit dem zweiter Verbundrandbereich;
wobei die erste Erhitzungseinrichtung zur Abgabe von Energie entlang der Stromrichtung ausgebildet ist; wobei die erste Erhitzungseinrichtung entlang der Stromrichtung ein erstes Energieabgabesegment und entlang der Stromrichtung ein am weitesten von dem ersten Energieabgabesegment entferntes letztes Energieabgabesegment beinhaltet; wobei in Verfahrensschritt d) in einem Bereich zwischen der Transportoberfläche und dem ersten Energieabgabesegment eine erste Temperatur T1 und in einem weiteren Bereich, vorzugsweise stromab, zwischen der Transportoberfläche und dem letzten Energieabgabesegment eine zweite Temperatur Tn ist. Die erste Temperatur T1 ist größer als die zweite Temperatur Tn. Weiterhin ist es bevorzugt, wenn die Temperatur T1 30°C größer, bevorzugt 40°C größer und am bevorzugtesten 50°C größer als die Temperatur Tn ist. Gelegentlich kann die erste Temperatur T1 um bis zu 200°C größer sein als die Temperatur Tn.

In einer erfindungsgemäßen Ausführungsform 2 ist das Verfahren nach der Ausführungsform 1 ausgestaltet, wobei der Verfahrensschritt d) ein Erhitzen durch thermische Konvektion beinhaltet. Dabei hat ein gasförmiger Wärmestrom vorzugsweise eine Temperatur in einem Bereich von 100 bis 1200°C, bevorzugt von 200 bis 1000°C, bevorzugter von 300 bis 900°C und am bevorzugtesten von 400°C bis 800°C.

In einer erfindungsgemäßen Ausführungsform 3 ist das Verfahren nach einer der Ausführungsformen 1 und 2 ausgestaltet, wobei in Verfahrensschritt d) ein gasförmiger Wärmestrom an einer Austrittsöffnung der ersten Erhitzungseinrichtung eine größere Strömungsgeschwindigkeit hat als an der Eintrittsöffnung der ersten Erhitzungseinrichtung.

In einer erfindungsgemäßen Ausführungsform 4 ist das Verfahren nach einer der Ausführungsformen 1 bis 3 ausgestaltet, wobei der flächenförmige Verbund maximal 0,5 Sekunden, bevorzugt maximal 0,3 Sekunden, am bevorzugtesten maximal 0,2 Sekunden dem Verfahrensschritt d) ausgesetzt wird.

In einer erfindungsgemäßen Ausführungsform 5 ist das Verfahren nach einer der Ausführungsformen 1 bis 4 ausgestaltet, wobei der flächenförmige Verbund in Verfahrensschritt b) auf eine Geschwindigkeit von mindestens 100 m/min, bevorzugt auf mindestens 200 m/min, am bevorzugtesten auf mehr als 300 m/min beschleunigt wird. Es ist in manchen Fällen vorteilhaft, den flächenförmigen Verbund auf maximal 800m/min zu beschleunigen. Das Beschleunigen erfolgt vorzugsweise in weniger als eine Sekunde, bevorzugter in weniger als 0,5 Sekunden. Weiterhin ist es bevorzugt, wenn vor Verfahrensschritt b) der flächenförmige Verbund vereinzelt wird. Ein bevorzugtes Vereinzeln ist ein Abziehen eines flächenförmigen Verbundes von einer Vielzahl gestapelter flächenförmiger Verbunde.

In einer erfindungsgemäßen Ausführungsform 6 ist das Verfahren nach einer der Ausführungsformen 1 bis 5 ausgestaltet, wobei in einem Verfahrensschritt c) die Dicke des flächenförmigen Verbunds mindestens in einem Teilbereich des ersten Verbundrandbereichs um mehr als 40 %, vorzugsweise um mehr als 45 % und besonders bevorzugt um mehr als 50 % der Dicke des flächenförmigen Verbunds verringert wird. Es ist in manchen Fällen vorteilhaft, die Dicke des flächenförmigen Verbunds um maximal 75 % zu verringern. Andernfalls ist eine Beeinträchtigung der Stabilität des Verpackungsvorläufers zu befürchten. Der Teilbereich des ersten Verbundrandbereichs beträgt vorzugsweise 40 % bis 95 %, bevorzugter 50 % bis 85 % und am bevorzugtesten 60 % bis 75 %, der Fläche des ersten Verbundrandbereichs.

In einer erfindungsgemäßen Ausführungsform 7 ist das Verfahren nach einer der Ausführungsformen 1 bis 6 ausgestaltet, wobei nach Verfahrensschritt d) der zweite Verbundrandbereich mit einer weiteren Erhitzungseinrichtung erhitzt wird. Es ist bevorzugt, dass der zweite Verbundrandbereich derartig erhitzt wird, dass eine in dem Verbundrandbereich befindliche zweite Kunststoffschicht erweicht, vorzugsweise schmilzt. Das Erhitzen dient insbesondere dazu, das Verbinden, insbesondere das Siegeln, des zweiten Verbundrandbereichs über die zweite Kunststoffschicht mit der ersten Kunststoffschicht zu erleichtern. Hierbei ist es bevorzugt, dass die zweite Kunststoffschicht mindestens über die Glastemperatur, vorzugsweise die Schmelztemperatur, eines in der Kunststoffschicht enthaltenen Polymers erhitzt wird. Vorzugsweise erfolgt dieses bei einer Temperatur in einem Bereich von 70 bis 300 °C, bevorzugter in einem Bereich von 75 bis 250 °C und besonders bevorzugt in einem Bereich von 80 bis 200 °C.

Ferner offenbart wird eine Ausführungsform 1 eines Verpackungsvorläufers erhältlich durch das Verfahren nach einer der Ausführungsformen 1 bis 7. Ein bevorzugter Verpackungsvorläufer ist mantelförmig. Hierbei ist es bevorzugt, dass der mantelförmige Verpackungsvorläufer so ausgebildet ist, dass aus diesem jeweils ein einziger Behälter gebildet werden kann. Dieses erfolgt im Gegensatz zu einem schlauchförmigen Verpackungsvorläufer, ohne dass der Verpackungsvorläufer nach dem Kontakt mit einem Nahrungsmittel, beispielsweise durch Schneiden, vereinzelt werden muss. Somit ist es bevorzugt, dass der mantelförmige Verpackungsvorläufer die Dimensionen eines einzelnen Behälters hat. Weiterhin ist es bevorzugt, dass der mantelförmige Verpackungsvorläufer gefaltet ist. Hierbei ist es bevorzugt, dass zwei flächenförmige Verbundlagen in dem gefalteten mantelförmigen Verpackungsvorläufer aufeinander zu liegen kommen.

Der Verpackungsvorläufer beinhaltet einen flächenförmigen Verbund,
wobei der flächenförmige Verbund einen ersten Überlappungsbereich und einen zweiten Überlappungsbereich beinhaltet;
wobei der erste Überlappungsbereich eine erste Schichtfolge, beinhaltend als einander überlagernde Schichten von einer Innenoberfläche des flächenförmigen Verbunds zu einer Außenoberfläche, eine erste Verbundträgerschicht und eine zweite Verbundträgerschicht, beinhaltet;
wobei in dem ersten Überlappungsbereich die erste Verbundträgerschicht mit der zweiten Verbundträgerschicht verbunden ist;
wobei der zweite Überlappungsbereich eine zweite Schichtfolge, beinhaltend als einander überlagernde Schichten von einer Innenoberfläche des flächenförmigen Verbunds zu einer Außenoberfläche, eine erste Verbundträgerschicht, eine zweite Verbundträgerschicht und eine dritte Verbundträgerschicht, beinhaltet;
wobei in dem zweiten Überlappungsbereich die zweite Verbundträgerschicht mit der dritten Verbundträgerschicht verbunden ist;
wobei der zweite Überlappungsbereich, zwischen der zweiten Verbundträgerschicht und der dritten Verbundträgerschicht, als einander überlagernde Schichten von einer Innenoberfläche des flächenförmigen Verbunds zu einer Außenoberfläche, eine dritte Verbundkunststoffschicht und eine zweite Verbundkunststoffschicht beinhaltet;
wobei in dem zweiten Überlappungsbereich die Schichtdicke der dritten Verbundträgerschicht größer ist als jeweils die Schichtdicke der ersten Verbundträgerschicht oder der zweiten Verbundträgerschicht oder beide;
wobei in dem ersten Überlappungsbereich zwischen der erste Verbundträgerschicht und der zweiten Verbundträgerschicht, als einander überlagernde Schichten von einer Innenoberfläche des flächenförmigen Verbunds zu einer Außenoberfläche, eine Verbundfarbschicht mit einer Verbundkunststoffschicht verbunden ist.

Eine Verbundkunststoffschicht beinhaltet bevorzugt mindestens ein Polyolefin, bevorzugter ein Polyethylen, bevorzugter eine Mischung aus einem LDPE und einem m-PE (mittels eines Metallocen-Katalysators hergestelltes Polyethylen). Eine bevorzugte Verbundträgerschicht besteht aus einem Faserstoff, vorzugsweise einem auf Pflanzen basierenden Faserstoff, insbesondere einem Zellstoff. Vorzugsweise ist der Faserstoff oder der Zellstoff verleimt. Ebenso können ungebleichte Faser- bzw. Zellstoffe eingesetzt werden. Papier und Karton sind als Verbundträgerschicht besonders bevorzugt. Das Flächengewicht der Verbundträgerschicht liegt vorzugsweise in einem Bereich von 120 bis 450 g/m2.

In einer Ausführungsform 2 ist der Verpackungsvorläufer nach der Ausführungsform 1 ausgestaltet, wobei der erste Überlappungsbereich und der zweite Überlappungsbereich aneinander grenzen. Hier ist es bevorzugt, dass dieses zumindest teilweise in einer Längsnaht ausgebildet ist. Vorzugsweise grenzen der erste Überlappungsbereich und der zweite Überlappungsbereich entlang von mindestens 50%, vorzugsweise mindestens 75% und besonders bevorzugt mindestens 95% der Längsnaht aneinander an.

In einer Ausführungsform 3 ist der Verpackungsvorläufer nach den Ausführungsformen 1 und 2 ausgestaltet, wobei die Verbundträgerschicht ein Loch aufweist. Dieses Loch dient zum Ausbilden eines überzogenen Lochs, das insbesondere für Trinkhalme oder Verschlüsse - auch Fitments genannt - eingesetzt wird.

Ferner wird eine Ausführungsform 1 eines geschlossenen Behälters offenbart, wobei der geschlossenen Behälter erhältlich ist durch ein Verschließen des Verpackungsvorläufers nach einer der Ausführungsformen 1 bis 3. Bevorzugt beinhaltet der geschlossene Behälter einen mit dem flächenförmigen Verbund ausgebildeten Deckel oder Boden oder beides. Ein bevorzugter geschlossener Behälter beinhaltet ein Nahrungsmittel.

Offenbart wird weiterhin eine Ausführungsform 1 einer Verwendung eines Verpackungsvorläufers nach einer der Ausführungsformen 1 bis 3 hergestellt mit einer Vorrichtung nach einer der Ausführungsformen 1 bis 11 zum Verpacken von Nahrungsmitteln.

Einen Beitrag zur Erfüllung mindestens einer der erfindungsgemäßen Aufgaben leistet eine Ausführungsform 1 einer Verwendung der Vorrichtung nach einer der Ausführungsformen 1 bis 11 zu einem Herstellen eines Verpackungsvorläufers zum Verpacken von Nahrungsmitteln. Bevorzugte Ausgestaltungen von Bestandteilen einer erfindungsgemäßen oder hierin offenbarten Kategorie, insbesondere der Vorrichtung, des flächenförmigen Verbunds, des Verpackungsvorläufers, des Verfahrens, des geschlossenen Behälters, und der Verwendung sind ebenso bevorzugt für gleichnamige oder entsprechende Bestandteile der jeweils anderen erfindungsgemäßen oder hierin offenbarten Kategorien.

### Transporteinrichtung

Allgemein dient die erfindungsgemäße Transporteinrichtung zum Befördern eines oder mehrerer flächenförmiger Verbunde oder Verpackungsvorläufer, insbesondere von flächenförmigen Verbunden während deren Umwandlung zu Verpackungsvorläufern. In diesem Zusammenhang ist es bevorzugt, dass die Transporteinrichtung eben ausgebildet ist. Eine bevorzugte, insbesondere ebene, Transporteinrichtung ist mindestens teilweise als ein Förderband oder eine Rollenbahn oder beides ausgebildet. Eine bevorzugte Transportoberfläche ist ein Riemen. Ein bevorzugter Riemen ist ein endlos umlaufender Riemen. Zudem ist es bevorzugt, wenn vor der Transporteinrichtung eine Vereinzelungseinrichtung zum Vereinzeln des flächenförmigen Verbunds ausgebildet ist. Ein bevorzugtes Vereinzeln ist ein Abziehen eines flächenförmigen Verbundes von einer Vielzahl gestapelter flächenförmiger Verbunde.

### Kontaktierungseinrichtung

Allgemein dient die erfindungsgemäße Kontaktierungseinrichtung zum Verbinden zweier Bereiche des flächenförmigen Verbunds, insbesondere beim Umwandeln des flächenförmigen Verbunds zu einem Verpackungsvorläufer. Die Kontaktierungseinheit kann zum chemischen, beispielsweise Kleben, oder physikalischem, beispielsweise Siegeln, oder zum chemischen und physikalischem Verbinden angeordnet und ausgebildet sein. Eine bevorzugte Kontaktierungseinrichtung ist eine Siegelstation, bevorzugt ausgebildet zu einem Siegeln des ersten Verbundrandbereichs und des zweiter Verbundrandbereichs. Bevorzugt wird in der Kontaktierungseinrichtung der erste Verbundrandbereich mit dem zweiter Verbundrandbereich unter Erhalten einer Längsnaht kontaktiert. Weiterhin ist es bevorzugt, wenn der erste Verbundrandbereich dem zweiten Verbundrandbereich gegenüber liegt.

### Außenoberfläche

Die Außenoberfläche des flächenförmigen Verbunds ist die Oberfläche, welche in einem aus dem flächenförmigen Verbund herzustellenden Behälter überwiegend nach außen weist. Demnach steht die Außenoberfläche in direktem Kontakt mit einer Umgebung des Behälters. In dem flächenförmigen Verbund bilden die Außenoberfläche und die Innenoberfläche einander gegenüberliegende Oberflächen des flächenförmigen Verbunds.

### Schichten

Zwei Schichten sind miteinander verbunden, wenn ihre Haftung aneinander über Van-der-Waals Anziehungskräfte hinausgeht. Miteinander verbundene Schichten sind bevorzugt eines ausgewählt aus der Gruppe bestehend aus miteinander versiegelt, miteinander verklebt, und miteinander verpresst, oder eine Kombination aus mindestens zwei davon. Sofern nicht anders angegeben können in einer Schichtfolge die Schichten mittelbar, das heißt mit einer oder mindestens zwei Zwischenschichten, oder unmittelbar, das heißt ohne Zwischenschicht, aufeinander folgen. Dies ist insbesondere der Fall bei der Formulierung, in der eine Schicht eine andere Schicht überlagert. Eine Formulierung, in der eine Schichtfolge aufgezählte Schichten beinhaltet, bedeutet, dass zumindest die angegebenen Schichten in der angegebenen Reihenfolge vorliegen. Diese Formulierung besagt nicht zwingend, dass diese Schichten unmittelbar aufeinander folgen. Eine Formulierung, in der zwei Schichten aneinander angrenzen, besagt, dass diese beiden Schichten unmittelbar und somit ohne Zwischenschicht aufeinanderfolgen. Diese Formulierung sagt jedoch nichts darüber aus, ob die beiden Schichten miteinander verbunden sind oder nicht. Vielmehr können diese beiden Schichten miteinander in Kontakt sein.

### Verbundträgerschicht

Als Verbundträgerschicht kann jedes dem Fachmann für diesen Zweck geeignete Material eingesetzt werden, welches eine ausreichende Festigkeit und Steifigkeit aufweist, um den Behälter soweit Stabilität zu geben, dass der Behälter im gefüllten Zustand seine Form im Wesentlichen beibehält. Dies ist insbesondere ein bevorzugtes Merkmal der Verbundträgerschicht, da sich die Erfindung insbesondere formstabilen Behälter betrifft. Verbundträgerschichten können aus einer Reihe von Kunststoffen bestehen. Eine bevorzugte Verbundträgerschicht besteht aus einem Faserstoff, vorzugsweise einem auf Pflanzen basierenden Faserstoff, insbesondere einem Zellstoff. Vorzugsweise ist der Faserstoff oder der Zellstoff verleimt. Ebenso können ungebleichte Faser- bzw. Zellstoffe eingesetzt werden. Papier und Karton sind als Verbundträgerschicht besonders bevorzugt. Das Flächengewicht der Verbundträgerschicht liegt vorzugsweise in einem Bereich von 120 bis 450 g/m², besonders bevorzugt in einem Bereich von 130 bis 400 g/m² und am meisten bevorzugt in einem Bereich von 150 bis 380 g/m². Ein bevorzugter Karton weist in der Regel einen ein- oder mehrschichtigen Aufbau auf und kann ein- oder beidseitig mit einer oder auch mehreren Deckschichten beschichtet sein. Weiterhin besitzt ein bevorzugter Karton eine Restfeuchtigkeit von weniger als 20 Gew.-%, bevorzugt von 2 bis 15 Gew.-% und besonders bevorzugt von 4 bis 10 Gew.-% bezogen auf das Gesamtgewicht des Kartons. Ein besonders bevorzugter Karton weist einen mehrschichtigen Aufbau auf. Weiterhin bevorzugt besitzt der Karton auf der zur Umgebung hin weisenden Oberfläche mindestens eine, besonders bevorzugt jedoch mindestens zwei Lagen einer Deckschicht, die dem Fachmann als "Strich" bekannt ist. Weiterhin besitzt ein bevorzugter Karton einen Scott-Bond-Wert in einem Bereich von 100 bis 360 J/m², bevorzugt von 120 bis 350 J/m² und insbesondere bevorzugt von 135 bis 310 J/m². Durch die vorstehend genannten Bereiche gelingt es, einen Verbund bereitzustellen, aus dem sich ein Behälter mit hoher Dichtigkeit, leicht und in geringen Toleranzen falten lässt.

### Barriereschicht

Als Barriereschicht kann jedes dem Fachmann für diesen Zweck geeignete Material eingesetzt werden, welches eine ausreichende Barrierewirkung gegen Gase, insbesondere gegenüber Sauerstoff, aufweist. Die Barriereschicht ist bevorzugt ausgewählt aus
a. einer Kunststoffbarriereschicht als elektrisch isolierender Barriereschicht;
b. einer Metallschicht als elektrisch leitender Barriereschicht;
c. einer Metalloxidschicht; oder
d. einer Kombination von mindestens zwei aus a. bis c.

Ist die Barriereschicht gemäß Alternative a. eine Kunststoffbarriereschicht, beinhaltet diese vorzugsweise mindestens 70 Gew.-%, besonders bevorzugt mindestens 80 Gew.-% und am meisten bevorzugt mindestens 95 Gew.-% mindestens eines Kunststoffs, der dem Fachmann für diesen Zweck insbesondere wegen für Verpackungsbehälter geeigneter Aroma- bzw. Gasbarriereeigenschaften bekannt ist. Als Kunststoffe, insbesondere thermoplastische Kunststoffe, kommen hier N oder O tragende Kunststoffe sowohl für sich als auch in Mischungen aus zwei oder mehr in Betracht. Erfindungsgemäß kann es sich als vorteilhaft erweisen, wenn die Kunststoffbarriereschicht eine Schmelztemperatur in einem Bereich von mehr als 155 bis 300°C, vorzugsweise in einem Bereich von 160 bis 280°C und besonders bevorzugt in einem Bereich von 170 bis 270°C besitzt.

Weiter bevorzugt weist die Kunststoffbarriereschicht ein Flächengewicht in einem Bereich von 2 bis 120 g/m², vorzugsweise in einem Bereich von 3 bis 60 g/m², besonders bevorzugt in einem Bereich von 4 bis 40 g/m² und darüber hinaus bevorzugt von 6 bis 30 g/m² auf. Weiterhin bevorzugt ist die Kunststoffbarriereschicht aus Schmelzen, beispielsweise durch Extrusion, insbesondere Schichtextrusion, erhältlich. Darüber hinaus bevorzugt kann die Kunststoffbarriereschicht auch über Kaschierung in den flächenförmigen Verbund eingebracht werden. Hierbei ist es bevorzugt, dass eine Folie in den flächenförmigen Verbund eingearbeitet wird. Gemäß einer anderen Ausführungsform können auch Kunststoffbarriereschichten ausgewählt sein, die durch Abscheidung aus einer Lösung oder Dispersion von Kunststoffen erhältlich sind.

Als geeignete Polymere kommen bevorzugt solche in Frage, die ein Molekulargewicht mit einem Gewichtsmittel, bestimmt durch Gelpermeationschromatographie (GPC) mittels Lichtstreuung, in einem Bereich von 3x10³ bis 1·10⁷ g/mol, vorzugsweise in einem Bereich von 5·10³ bis 1·10⁶ g/mol und besonders bevorzugt in einem Bereich von 6·10³ bis 1·10⁵ g/mol aufweisen. Als geeignete Polymere kommen insbesondere Polyamid (PA) oder Polyethylenvinylalkohol (EVOH) oder einer Mischung daraus in Betracht.

Unter den Polyamiden kommen alle dem Fachmann für den erfindungsgemäßen Einsatz geeignet erscheinenden PA in Frage. Besonders sind hier PA 6, PA 6.6, PA 6.10, PA 6.12, PA 11 oder PA 12 oder eine Mischung aus mindestens zwei davon zu nennen, wobei PA 6 und PA 6.6 besonders bevorzugt sind und PA 6 ferner bevorzugt ist. PA 6 ist beispielsweise unter den Handelsnamen Akulon®, Durethan® und Ultramid® kommerziell erhältlich. Darüber hinaus geeignet sind amorphe Polyamide wie MXD6, Grivory® sowie Selar® PA. Weiter bevorzugt ist es, dass das PA eine Dichte in einem Bereich von 1,01 bis 1,40 g/cm³, vorzugsweise in einem Bereich von 1,05 bis 1,30 g/cm³ und besonders bevorzugt in einem Bereich von 1,08 bis 1,25 g/cm³ aufweist. Weiterhin ist es bevorzugt, dass das PA eine Viskositätszahl in einem Bereich von 130 bis 250 ml/g und vorzugsweise in einem Bereich von 140 bis 220 ml/g.

Als EVOH kommen alle dem Fachmann für den erfindungsgemäßen Einsatz geeignet erscheinenden EVOH in Betracht. Beispiele hierfür sind unter anderem unter den Handelsnamen EVAL™ der EVAL Europe NV, Belgien in einer Vielzahl unterschiedlicher Ausführungen kommerziell erhältlich, beispielsweise die Sorten EVAL™ F104B oder EVAL™ LR171B. Bevorzugte EVOH besitzen mindestens eine, zwei, mehrere oder alle der folgenden Eigenschaften:
- ein Ethylengehalt in einem Bereich von 20 bis 60 mol-%, bevorzugt von 25 bis 45 mol-%;
- eine Dichte in einem Bereich von 1,0 bis 1,4 g/cm³, bevorzugt von 1,1 bis 1,3 g/cm³;
- einen Schmelzpunkt in einem Bereich von mehr als 155 bis 235 °C, bevorzugt von 165 bis 225 °C;
- einen MFR-Wert (210 °C/2,16kg, wenn T_{S(EVOH)}<230 °C; 230 °C/2,16kg, wenn 210 °C<T_{S(EVOH)}<230 °C) in einem Bereich von 1 bis 25 g/10min, bevorzugt von 2 bis 20 g/10min;
- eine Sauerstoffpermeationsrate in einem Bereich von 0,05 bis 3,2 cm³·20µm/m²·day·atm, bevorzugt in einem Bereich von 0,1 bis 1 cm³·20µm/m²·day·atm.

Bevorzugt hat mindestens eine Polymerschicht, weiter bevorzugt die Verbundkunststoffschicht, oder bevorzugt alle Polymerschichten eine Schmelztemperatur unterhalb der Schmelztemperatur der Barriereschicht. Dies gilt insbesondere, wenn die Barriereschicht aus Polymer gebildet ist. Hierbei unterscheiden sich die Schmelztemperaturen der mindestens einen, insbesondere der Verbundkunststoffschicht, und die Schmelztemperatur der Barriereschicht vorzugsweise um mindestens 1 K, besonders bevorzugt um mindestens 10K, noch mehr bevorzugt um mindestens 50 K darüber hinaus bevorzugt mindestens 100 K. Der Temperaturunterschied sollte bevorzugt nur so hoch gewählt werden, dass es so nicht zu einem Schmelzen der Barriereschicht, insbesondere nicht zu einem Schmelzen der Kunststoffbarriereschicht, während des Faltens kommt.

Gemäß Alternative b. ist die Barriereschicht eine Metallschicht. Als Metallschicht eignen sich prinzipiell alle Schichten mit Metallen, die dem Fachmann bekannt sind und eine hohe Licht-, und Sauerstoffundurchlässigkeit schaffen können. Gemäß einer bevorzugten Ausführungsform kann die Metallschicht als Folie oder als abgeschiedene Schicht vorliegen, z.B. nach einer physikalischen Gasphasenabscheidung. Die Metallschicht ist vorzugsweise eine ununterbrochene Schicht. Gemäß einer weiteren bevorzugten Ausführungsform weist die Metallschicht eine Dicke in einem Bereich von 3 bis 20 µm, bevorzugt in einem Bereich von 3,5 bis 12 µm und besonders bevorzugt in einem Bereich von 4 bis 10 µm auf.

Bevorzugt ausgewählte Metalle sind Aluminium, Eisen oder Kupfer. Als Eisenschicht kann eine Stahlschicht, z.B. in Form einer Folie bevorzugt sein. Weiterhin bevorzugt stellt die Metallschicht eine Schicht mit Aluminium dar. Die Aluminiumschicht kann zweckmäßig aus einer Aluminiumlegierung, beispielsweise AlFeMn, AlFe1,5Mn, AlFeSi oder AlFeSiMn bestehen. Die Reinheit liegt üblicherweise bei 97,5 % und höher, vorzugsweise bei 98,5 % und höher, jeweils bezogen auf die gesamte Aluminiumschicht. In einer besonderen Ausgestaltung, besteht die Metallschicht aus einer Aluminiumfolie. Geeignete Aluminiumfolien besitzen eine Dehnbarkeit von mehr als 1%, bevorzugt von mehr als 1,3 % und besonders bevorzugt von mehr als 1,5 %, und eine Zugfestigkeit von mehr als 30 N/mm², bevorzugt mehr als 40 N/mm² und besonders bevorzugt mehr als 50 N/mm². Geeignete Aluminiumfolien zeigen im Pipettentest eine Tropfengröße von mehr als 3 mm, bevorzugt mehr als 4 mm und besonders bevorzugt von mehr als 5 mm. Geeignete Legierungen zum Erstellen von Aluminiumschichten oder -folien sind unter den Bezeichnungen EN AW 1200, EN AW 8079 oder EN AW 8111 von Hydro Aluminium Deutschland GmbH oder Amcor Flexibles Singen GmbH kommerziell erhältlich. Im Falle einer Metallfolie als Barriereschicht kann ein- und/oder beidseitig der Metallfolie eine Haftvermittlerschicht zwischen der Metallfolie und einer nächstgelegenen Poylmerschicht vorgesehen sein. Weiterhin bevorzugt kann als Barriereschicht gemäß Alternative c. eine Metalloxidschicht ausgewählt sein. Als Metalloxidschichten kommen alle Metalloxidschichten in Betracht, die dem Fachmann geläufig sind und geeignet erscheinen, um eine Barrierewirkung gegenüber Licht, Dampf und/oder Gas zu erzielen. Insbesondere bevorzugt sind Metalloxidschichten basierend auf den schon zuvor genannten Metallen Aluminium, Eisen oder Kupfer, sowie solche Metalloxidschichten, die auf Titan- oder Siliziumoxidverbindungen basieren. Eine Metalloxidschicht wird beispielhaft durch Bedampfen einer Kunststoffschicht, beispielsweise eine orientierte Polypropylenfolie mit Metalloxid erzeugt. Ein bevorzugtes Verfahren hierfür ist die physikalische Gasphasenabscheidung.

Gemäß einer weiteren bevorzugten Ausführungsform kann die Metallschicht der Metalloxidschicht als Schichtenverbund aus einer oder mehrerer Kunststoffschichten mit einer Metallschicht vorliegen. Eine solche Schicht ist zum Beispiel erhältlich durch Bedampfen einer Kunststoffschicht, beispielsweise eine orientierte Polypropylenfolie, mit Metall. Ein bevorzugtes Verfahren hierfür ist die physikalische Gasphasenabscheidung

### Polymerschichten

Im Folgenden bezieht sich der Begriff "Polymerschicht" insbesondere auf die Verbundkunststoffschicht, die Polymeraußenschicht und die Polymerzwischenschicht. Hierbei wird als Polymerzwischenschicht eine Polymerschicht zwischen der Verbundträgerschicht und der Barriereschicht bezeichnet. Ein bevorzugtes Polymer ist ein Polyolefin. Die Polymerschichten können weitere Bestandteile aufweisen.

Die Polymerschichten können aus allen dem Fachmann bekannten Polymeren oder Polymermischungen erhalten werden, wobei die Polymerschichten bzw. die diese bildenden Polymere oder Polymermischungen geeignet sein sollten, die einzelnen Polymerschichten mit den weiteren Bestandteilen zu einem flächenförmigen Verbund zu verbinden. Als Polymere kommen sowohl Homo-Polymere als auch Co-Polymere in Betracht, wobei letztere bevorzugt sind, da diese es besonders gut durch die Wahl des oder der geeigneten Co-Monomere auf die Anforderungen des flächenförmigen Verbunds genau einzustellen. Es sind thermoplastische Polymere oder Polymermischungen bevorzugt. Unter den thermoplastischen Polymeren sind Polyolefine besonders bevorzugt. Die Polymerschichten werden bevorzugt in einem Extrudierverfahren in das flächenförmige Verbundmaterial ein- bzw. aufgebracht. Die weiteren Bestandteile der Polymerschichten sind bevorzugt Bestandteile, die das Verhalten der Polymerschmelze beim Auftragen als Schicht nicht nachteilig beeinflussen. Die weiteren Bestandteile können beispielsweise anorganische Verbindungen, wie Metallsalze oder weitere Kunststoffe, wie weitere thermoplastische Kunststoffe sein. Es ist jedoch auch denkbar, dass die weiteren Bestandteile Füllstoffe oder Pigmente sind, beispielsweise Ruß oder Metalloxide. Als geeignete thermoplastische Kunststoffe kommen für die weiteren Bestandteile insbesondere solche in Betracht, die durch ein gutes Extrusionsverhalten leicht verarbeitbar sind. Hierunter eignen sich durch Kettenpolymerisation erhaltene Polymere, insbesondere Polyester oder Polyolefine, wobei cyclische Olefin-Co-Polymere (COC), polycyclische Olefin-Co-Polymere (POC), insbesondere Polyethylen und Polypropylen, besonders bevorzugt sind und Polyethylen ganz besonders bevorzugt ist. Unter den Polyethylenen sind HDPE (*high density polyethylene*), MDPE (*medium density polyethylene*), LDPE (*low density polyethylene*), LLDPE (*linear low density polyethylene*) und VLDPE (*very low density polyethylene*) sowie Mischungen aus mindestens zwei davon bevorzugt. Es können auch Mischungen aus mindestens zwei thermoplastischen Kunststoffen eingesetzt werden. Geeignete Polymerschichten besitzen eine Schmelzflussrate (MFR - *melt flow rate*) in einem Bereich von 1 bis 25 g/10 min, vorzugsweise in einem Bereich von 2 bis 20 g/10 min und besonders bevorzugt in einem Bereich von 2,5 bis 15 g/10 min, und eine Dichte in einem Bereich von 0,890 g/cm³ bis 0,980 g/cm³, vorzugsweise in einem Bereich von 0,895 g/cm³ bis 0,975 g/cm³, und weiter bevorzugt in einem Bereich von 0,900 g/cm³ bis 0,970 g/cm³. Die Polymerschichten besitzen bevorzugt mindestens eine Schmelztemperatur in einem Bereich von 80 bis 155°C, vorzugsweise in einem Bereich von 90 bis 145°C und besonders bevorzugt in einem Bereich von 95 bis 135°C.

### Überlappungsbereich

Der Überlappungsbereich dient allgemein dazu, beim Verpackungsvorläufer und auch bei dem daraus gebildeten Behälter eine Verbindung von zwei Randbereichen des flächenförmigen Verbunds zu schaffen, die den Belastungen im Fall des Verpackungsvorläufers beim Bilden und Befüllen des Behälters und im Fall des befüllten Behälters die des Transports und des Schutzes des darin enthaltenen Lebensmittels sicher zu stellen. Der Überlappungsbereich wird vorzugsweise unter Verwendung der Führungselemente beim Umlegen des flächenförmigen Verbundes erhalten. Ein bevorzugter Überlappungsbereich stellt eine Längsnaht eines Verpackungsvorläufers da.

### Verbundfarbschicht

Allgemeiner Zweck der Verbundfarbschicht ist es, dem flächenförmigen Verbund, dann dem Verpackungsvorläufer und schließlich dem daraus geformten fertigen Behälter ein Dekor, eine Beschriftung oder beides zu geben. Die Verbundfarbschicht beinhaltet vorzugsweise mindestens ein Farbmittel. Eine bevorzugte Verbundfarbschicht besteht aus einer Vielzahl von, bevorzugt gedruckten, Rasterpunkten. Bevorzugt wird die Verbundfarbschicht auf der von der Verbundkunststoffschicht der abgewandten Seite der Verbundträgerschicht des flächenförmigen Verbunds aufgebracht. Ein bevorzugtes Aufbringen ist ein Tiefdruck.

### Polyolefin

Allgemein dient der Einsatz von Polyolefinen zum Ausbilden von einer Polymerschicht, Hierbei ist es bevorzugt, dass Polyolefine besonders zum Ausbilden einer Polymerschicht geeignet sind. Ein bevorzugtes Polyolefin ist ein Polyethylen (PE) oder ein Polypropylen (PP) oder beides. Ein bevorzugtes Polyethylen ist eines ausgewählt ist aus der Gruppe bestehend aus einem LDPE, einem LLDPE, und einem HDPE, oder eine Kombination aus mindestens zwei davon. Ein weiteres bevorzugtes Polyolefin ist ein mPolyolefin (mittels eines Metallocen-Katalysators hergestelltes Polyolefin). Geeignete Polyethylene besitzen eine Schmelzflussrate (MFI - Schmelzflussindex = MFR - *melt flow rate*) in einem Bereich von 1 bis 25 g/10 min, vorzugsweise in einem Bereich von 2 bis 20 g/10 min und besonders bevorzugt in einem Bereich von 2,5 bis 15 g/10 min, und eine Dichte in einem Bereich von 0,900 g/cm³ bis 0,980 g/cm³, vorzugsweise in einem Bereich von 0,905 g/cm³ bis 0,975 g/cm³, und weiter bevorzugt in einem Bereich von 0,910 g/cm³ bis 0,970 g/cm³.

### mPolymer

Ein mPolymer ist ein Polymer, das sich, vorzugsweise in Mischungen mit anderen Polymeren, vorzugsweise Polyolefinen, zum Ausbilden einer Polymerschicht eignet. Ein mPolymer wird mittels eines Metallocen-Katalysators hergestellt. Ein Metallocen ist eine metallorganische Verbindung, in welcher ein zentrales Metallatom zwischen zwei organischen Liganden, beispielsweise Cyclopentadienyl-Liganden, angeordnet ist. Ein bevorzugtes mPolymer ist ein mPolyolefin, bevorzugt ein mPolyethylen oder ein mPolypropylen oder beides. Ein bevorzugtes mPolyethylen ist eines ausgewählt ist aus der Gruppe bestehend aus einem mLDPE, einem mLLDPE, und einem mHDPE, oder eine Kombination aus mindestens zwei davon, wobei m-LLDPE besonders bevorzugt ist.

### Verbundkunststoffschicht

Die Verbundkunststoffschicht basiert auf thermoplastischen Polymeren, wobei die Verbundkunststoffschicht einen teilchenförmigen anorganischen Feststoff beinhalten kann. Bevorzugt ist es jedoch, dass die Verbundkunststoffschicht zu mindestens 70 Gew.-%, vorzugsweise mindestens 80 Gew.-% und besonders bevorzugt mindestens 95 Gew.-%, jeweils bezogen auf das Gesamtgewicht der Verbundkunststoffschicht, ein thermoplastisches Polymer beinhaltet. Vorzugsweise weist das Polymer bzw. die Polymermischung der Verbundkunststoffschicht eine Dichte (gemäß ISO 1183-1:2004) in einem Bereich von 0,900 bis 0,980 g/cm³, besonders bevorzugt in einem Bereich von 0,900 bis 0,975 g/cm³ und am meisten bevorzugt in einem Bereich von 0,900 bis 0,970 g/cm³ auf. Es bevorzugt, dass die Verbundkunststoffschicht von der Trägerschicht aus betrachtet in dem flächenförmigen Verbund zum Behälterinnenraum weist, wenn aus dem flächenförmigen Verbund ein Behälter gebildet wurde. Immer wieder steht die Verbundkunststoffschicht in direktem Kontakt mit dem Nahrungsmittel des Behälters.

### Extrudieren

Das Extrudieren dient allgemein dem Verflüssigen und Auftragen bzw. Einarbeiten der Polymere, um die Polymerschichten des flächenförmigen Verbunds auszubilden. Bei der Extrusion werden die Polymere vorzugsweise auf Temperaturen von 210 bis 350°C, gemessen an dem aufgeschmolzenen Polymerfilm unterhalb des Austritts an der Extruderdüse, erwärmt. Die Extrusion kann mittels dem Fachmann bekannten und kommerziell erhältlichen Extrusionswerkzeugen wie beispielsweise Extrudern, Extruderschnecken, Feedblock etc. erfolgen. Am Ende des Extruders befindet sich bevorzugt eine Öffnung durch die die Polymerschmelze gepresst wird. Die Öffnung kann jede Form aufweisen, die es erlaubt die Polymerschmelze auf den Verbundvorläufer zu extrudieren. So kann die Öffnung beispielsweise eckig, oval oder rund sein. Die Öffnung weist bevorzugt die Form eines Schlitzes eines Trichters auf. In einer bevorzugten Ausgestaltung des Verfahrens erfolgt das Aufbringen durch einen Schlitz. Der Schlitz weist bevorzugt eine Länge in einem Bereich von 0,1 bis 100 m, bevorzugt in einem Bereich von 0,5 bis 50 m, besonders bevorzugt in einem Bereich von 1 bis 10 m auf. Weiterhin weist der Schlitz bevorzugt eine Breite in einem Bereich von 0,1 bis 20 mm, bevorzugt in einem Bereich von 0,3 bis 10 mm, besonders bevorzugt in einem Bereich von 0,5 bis 5 mm auf. Während des Aufbringens der Polymerschmelze ist es bevorzugt, dass sich der Schlitz und der Verbundvorläufer relativ zu einander bewegen. So ist ein Verfahren bevorzugt, wobei sich der Verbundvorläufer relativ zum Schlitz bewegt.

Bei einem bevorzugten Extrusionsbeschichten wird die Polymerschmelze während des Aufbringens gestreckt, wobei dieses Strecken vorzugsweise durch Schmelzstrecken, ganz besonders bevorzugt durch monoaxiales Schmelzstrecken, erfolgt. Dazu wird die Schicht mittels eines Schmelzextruders in geschmolzenem Zustand auf den Verbundvorläufer aufgebracht und die aufgetragene, sich noch in geschmolzenem Zustand befindliche Schicht wird anschließend in vorzugsweise monoaxialer Richtung gestreckt, um eine Orientierung des Polymers in dieser Richtung zu erzielen. Anschließend lässt man die aufgetragene Schicht zum Zwecke der Thermofixierung abkühlen. In diesem Zusammenhang ist es besonders bevorzugt, dass das Strecken durch mindestens folgende Aufbringschritte erfolgt:
b 1. Austreten der Polymerschmelze als Schmelzefilm über mindestens einen Extruderdüsenschlitz mit einer Austrittsgeschwindigkeit Vₐᵤₛ;
b2. Auftragen des Schmelzefilms auf den sich relativ zu dem mindestens einen Extruderdüsenschlitz mit einer Bewegungsgeschwindigkeit Vᵥₒᵣ bewegenden Verbundvorläufer;
wobei Vₐᵤₛ < Vᵥₒᵣ ist. Insbesondere bevorzugt ist es, dass Vᵥₒᵣ um einen Faktor im Bereich von 5 bis 200, besonders bevorzugt in einem Bereich von 7 bis 150, darüber hinaus bevorzugt in einem Bereich von 10 bis 50 und am meisten bevorzugt in einem Bereich von 15 bis 35 größer ist als Vₐᵤₛ. Dabei ist es bevorzugt, dass das Vᵥₒᵣ mindestens 100 m/min, besonders bevorzugt mindestens 200 m/min und ganz besonders bevorzug mindestens 350 m/min beträgt, üblicherweise jedoch nicht über 1300 m/min liegt. Nachdem die Schmelzeschicht auf den Verbundvorläufer mittels des vorstehend beschriebenen Streckverfahrens aufgebracht wurde, lässt man die Schmelzeschicht zum Zwecke der Thermofixierung abkühlen, wobei dieses Abkühlen vorzugsweise durch Abschrecken über den Kontakt mit einer Fläche erfolgt, die auf eine Temperatur in einem Bereich von 5 bis 50°C, besonders bevorzugt in einem Bereich von 10 bis 30°C gehalten wird.

Gemäß einer weiteren bevorzugten Ausgestaltung wird die ausgetretene Fläche auf eine Temperatur unter der niedrigsten Schmelztemperatur der in dieser Fläche oder ihren Flanken vorgesehenen Polymere abgekühlt, und anschließend zumindest die Flanken der Fläche von dieser Fläche abgetrennt. Das Abkühlen kann auf jede dem Fachmann geläufige und geeignet erscheinende Weise durchgeführt werden. Bevorzugt wird auch hier die schon zuvor beschriebene Thermofixierung. Anschließend werden zumindest die Flanken, von der Fläche abgetrennt. Das Abtrennen kann auf jede dem Fachmann geläufige und geeignet erscheinende Weise durchgeführt werden. Bevorzugt erfolgt das Abtrennen mittels Messer, Laserstrahl oder Wasserstrahl, oder eine Kombination von zwei oder mehr davon, wobei der Einsatz von Messern, insbesondere Messern zum Scherenschnitt besonders bevorzugt ist.

### Verbundrandbereich

Allgemein dienen die Verbundrandbereiche des flächenförmigen Verbunds dem Bilden einer Längsnaht eines Verpackungsvorläufers. Bevorzug weist der flächenförmige Verbund mindestens einen ersten und einen zweiten Verbundrandbereich auf. Der erste Verbundbereich ist ein Teilbereich des flächenförmigen Verbundes. Bevorzugt befindet sich der erste Verbundrandbereich an einer Seite des flächenförmigen Verbundes. Weiterhin ist es bevorzugt, wenn der erste Verbundrandbereich parallel zur den Längsrillen des flächenförmigen Verbundes verläuft. Ein bevorzugter erster Verbundrandbereich hat eine Breite von maximal 30 mm, bevorzugter von maximal 25 mm und am bevorzugtesten von 23 mm. Zudem ist es von Vorteil, wenn der erste Verbundrandbereich dem zweiten Verbundrandbereich gegenüber liegt. In einer vorteilhaften Ausführung bilden der erste Verbundrandbereich und der zweite Verbundrandbereich den ersten und zweiten Überlappungsbereich und somit die Längsnaht eines Verpackungsvorläufers._Der zweite Verbundrandbereich ist ein Teilbereich des flächenförmigen Verbundes. Bevorzugt befindet sich der zweite Verbundrandbereich an einer Seite des flächenförmigen Verbundes. Weiterhin ist es bevorzugt, wenn der zweite Verbundrandbereich parallel zur den Längsrillen des flächenförmigen Verbundes verläuft. Ein bevorzugter zweiter Verbundrandbereich hat eine Breite von maximal 20 mm, bevorzugter von maximal 17 mm und am bevorzugtesten von 15 mm.

### Schäleinrichtung

Allgemein ist die Schäleinrichtung so ausgestaltet und ausgebildet, dass der flächenförmige Verbund, insbesondere die Trägerschicht, im Durchmesser verringert wird. Hierbei wird in einer Schälstation ein Streifen aus Polyolefin oder Karton oder beiden an einer Kante des flächenförmigen Verbundes mechanisch abgetragen, vorzugsweise abgeschält. Hierzu werden vorzugsweise Schälmesser eingesetzt, wobei diese besonders bevorzugt rotieren. Derartige Schälmesser und eine diese Aufnehmende Schälvorrichtung sind bei Fortuna GmbH, Deutschland, kommerziell erhältlich.

### Erhitzungseinrichtung

Eine Erhitzungseinrichtung ist ausgebildet zum Aufschmelzen einer Polymerschicht des flächenförmigen Verbunds. Bevorzugt besteht eine Erhitzungseinrichtung aus Metall. Ein bevorzugtes Metall ist ein Edelstahl. Es ist bevorzugt, wenn die Erhitzungseinrichtung zur Energieabgabe mindestens ein Energieabgabesegment, bevorzugt mindestens 5, bevorzugter mindestens 10, am bevorzugtesten mindestens 50 Energieabgabesegmente beinhaltet. Weiterhin ist es bevorzugt, wenn eine Mehrzahl der Energieabgabesegmente in Stromrichtung hintereinander ausgebildet ist. Bevorzugte Energieabgabesegmente enthalten mindestens eine Öffnung. Bevorzugte Öffnungen sind Austrittsöffnungen. Sofern die Energieabgabesegmente Austrittsöffnungen enthalten, enthält die Erhitzungseinrichtung mindestens eine Eintrittsöffnung. Ein bevorzugtes Medium hat an der mindestens einen Eintrittsöffnung eine niedrigere Strömungsgeschwindigkeit als an der mindestens einen Austrittsöffnung des Energieabgabesegments.

### Energieabgabesegmente

Die Energieabgabesegmente sind ausgebildet zum Erhitzen der thermisch zu behandelnde Bereiche des flächenförmigen Verbunds. Die Abgabe von Energie kann durch Strahlung, durch Heißgas, durch einen Feststoffwärmekontakt, durch mechanische Schwingungen, bevorzugt durch Ultraschall, oder durch eine Kombination von mindestens zwei dieser Maßnahmen erfolgen. Besonders bevorzugt erfolgt die thermische Behandlung durch Bestrahlung, bevorzugt elektromagnetische Strahlung und insbesondere bevorzugt elektromagnetische Induktion oder auch durch Heißgas. Energie wird von den Energieabgabesegmenten bevorzugt in Form von Wärmeenergie abgegeben. Die Wärmeenergie kann direkt durch Kontaktieren des zu erhitzenden Gegenstandes oder indirekt durch ein beheiztes Medium abgegeben werden. Ein bevorzugtes Medium ist ein Heißgas. Ein bevorzugtes Heißgas ist Luft. Bevorzugt wird die Luft durch einen Gasbrenner oder elektrisch beheizt.

### Ionisierungseinrichtung

Mit Hilfe einer Ionisierungseinrichtung wird ein Elektron aus der Hülle eines Atoms oder Moleküls herausgelöst, um zu behandelnde Bereiche des flächenförmigen Verbunds damit zu versehen. Eine Ionisierung kann mit Hilfe einer Flammbehandlung, eine chemische Behandlung (z. B. Fluorierung), einer Koronabehandlung oder eine Plasmabehandlung, bzw. Kombinationen der Verfahren durchgeführt werden. Bevorzugt wird die Behandlung an einer Polymerschmelze durchgeführt.

Bei der Koronabehandlung wird der flächenförmige Verbund über eine enganliegende Elektrode einer elektrischen Hochspannungsentladung ausgesetzt. Dabei wird ein Hochfrequenzgenerator mit einer Wechselspannung von 5 bis 40 kV und einer Frequenz zwischen 5 und 80 kHz betrieben.

Bei der Plasmabehandlung wird ein Plasmastrahl eingesetzt. Unter einem Plasmastrahl wird insbesondere ein zumindest teilweise durch eine elektrische Entladung ionisierter Gasstrom verstanden. Vorzugsweise wird ein atmosphärischer Plasmastrahl verwendet. In einer bevorzugten Ausführungsform wird der Plasmastrahl mittels einer hochfrequenten Hochspannung erzeugt. Der atmosphärische Plasmastrahl ist bevorzugt nicht-thermisch, das heißt, dass die Ionentemperatur des Plasmastrahls erheblich unterhalb der Elektronentemperatur liegt. Auf diese Weise kann ein vergleichsweise kühler Plasmastrahl, beispielsweise von einer Ionentemperatur von wenigen 100°C, vorzugsweise von weniger als 500°C, erzeugt werden. Als Plasmaquellen können Plasmadüsen verwendet werden.

### Falteinrichtung

Allgemein dient die Faltvorrichtung dazu, den flächenförmigen Verbund mit Faltungen bzw. Knicken zu versehen. Diese bilden die Grundlage für die Ecken und Kanten des Behälters, der aus dem gefalteten flächenförmigen Verbund gebildet wird. Die Falteinrichtung besteht vorzugsweise aus Führungselementen, die ausgestaltet sind, den Faltvorgang den flächenförmigen Verbund um die Materialschwächungen herum vorzugeben und kontrolliert durchzuführen. Eine bevorzugte Materialschwächung kann eine Rillung oder eine Perforation sein. Eine Perforation kann eine mechanische Perforation oder Laserperforation sein. Die Führungselemente können aus Schienen bestehen. Bevorzugt können sie aber auch aus Riemen gebildet werden. Zur Unterstützung eines kontinuierlichen Faltvorganges sind die Führungselemente in Stromrichtung so ausgebildet, dass in Stromrichtung ein jeweils stärkerer Fortschritt des Faltvorgangs vorgegeben wird.

### Haftung / Haftvermittlerschicht

Eine Haftvermittlerschicht dient in Abgrenzung zu einer Siegelschicht allgemein zum Kleben, vorzugsweise zum chemischen Verbinden. Zwischen Schichten, welche nicht unmittelbar aneinander angrenzen, kann sich eine Haftvermittlerschicht befinden, bevorzugt zwischen der Barriereschicht und der Verbundkunststoffschicht. Als Haftvermittler in einer Haftvermittlerschicht kommen alle Kunststoffe in Betracht, die durch Funktionalisierung mittels geeigneter funktioneller Gruppen geeignet sind, durch das Ausbilden von Ionenbindungen oder kovalenten Bindungen zu einer Oberfläche einer jeweils angrenzenden Schicht eine feste Verbindung zu erzeugen. Vorzugsweise handelt es sich um funktionalisierte Polyolefine, die durch Co-Polymerisation von Ethylen mit Acrylsäuren wie Acrylsäure, Methacrylsäure, Crotonsäure, Acrylaten, Acrylatderivaten oder Doppelbindungen tragenden Carbonsäureanhydriden, beispielsweise Maleinsäureanhydrid, oder mindestens zwei davon, erhalten wurden. Hierunter sind Polyethylenmaleinsäureanhydrid-Pfropfpolymere (EMAH), Ethylen-Acrylsäure-Copolymere (EAA) oder Ethylen-Methacrylsäure-Copolymere (EMAA) bevorzugt, welche beispielsweise unter den Handelsbezeichnungen Bynel® und Nucrel®0609HSA durch DuPont oder Escor®6000ExCo von ExxonMobile Chemicals vertrieben werden.

Erfindungsgemäß ist es bevorzugt, dass die Haftung zwischen einer Verbundträgerschicht, einer Polymerschicht oder einer Barriereschicht zu der jeweils nächsten Schicht mindestens 0,5 N/15mm, vorzugsweise mindestens 0,7 N/15mm und besonders bevorzugt mindestens 0,8 N/15mm, beträgt. In einer erfindungsgemäßen Ausgestaltung ist es bevorzugt, dass die Haftung zwischen einer Polymerschicht und einer Verbundträgerschicht mindestens 0,3 N/15mm, bevorzugt mindestens 0,5 N/15mm und besonders bevorzugt mindestens 0,7 N/15mm beträgt. Weiterhin ist es bevorzugt, das die Haftung zwischen einer Barriereschicht und einer Polymerschicht mindestens 0,8 N/15mm, bevorzugt mindestens 1,0 N/15mm und besonders bevorzugt mindestens 1,4 N/15mm beträgt. Für den Fall, dass eine Barriereschicht über eine Haftvermittlerschicht mittelbar auf eine Polymerschicht folgt ist es bevorzugt, dass die Haftung zwischen der Barriereschicht und der Haftvermittlerschicht mindestens 1,8 N/15mm, bevorzugt mindestens 2,2 N/15mm und besonders bevorzugt mindestens 2,8 N/15mm beträgt. In einer besonderen Ausgestaltung ist die Haftung zwischen den einzelnen Schichten so stark ausgebildet, dass es beim Haftungstest zu einem Zerreißen einer Verbundträgerschicht, im Falle eines Kartons als Verbundträgerschicht zu einem so genannten Kartonfaserriss, kommt.

### Deckschicht

Eine bevorzugte Deckschicht ist ein "Strich". Ein "Strich" ist in der Papierherstellung eine Deckschicht, welche anorganische Feststoffpartikel, bevorzugt Pigmente und Additive, beinhaltet. Der "Strich" wird bevorzugt als flüssige Phase, vorzugsweise als Suspension oder Dispersion, auf eine Oberfläche einer papier- oder kartonhaltigen Schicht aufgebracht. Eine bevorzugte Dispersion ist eine wässrige Dispersion. Eine bevorzugte Suspension ist eine wässrige Suspension. Eine weitere bevorzugte flüssige Phase beinhaltet anorganische Feststoffpartikel, bevorzugt Pigmente; einen Binder; und Additive. Ein bevorzugtes Pigment ist ausgewählt aus der Gruppe bestehend aus Kalziumkarbonat, Kaolin, Talkum, Silikat, einem Kunststoffpigment und Titandioxid. Ein bevorzugtes Kaolin ist ein kalziniertes Kaolin. Ein bevorzugtes Kalziumkarbonat ist eines ausgewählt aus der Gruppe bestehend aus Marmor, Kreide und einem präzipierten Kalziumkarbonat (PCC) oder eine Kombination aus mindestens zwei davon. Ein bevorzugtes Silikat ist ein Schichtsilikat. Ein bevorzugtes Kunststoffpigment ist kugelförmig, bevorzugt hohlkugelförmig. Ein bevorzugter Binder ist einer ausgewählt aus der Gruppe bestehend aus Styrol-Butadien, Acrylat, Acrylnitril, eine Stärke und ein Polyvinylalkohol oder eine Kombination aus mindestens zwei davon, wobei Acrylat bevorzugt ist. Eine bevorzugte Stärke ist eines ausgewählt aus der Gruppe bestehend aus kationisch modifiziert, anionisch modifiziert und fragmentiert oder eine Kombination aus mindestens zwei davon. Ein bevorzugtes Additiv ist eines ausgewählt aus der Gruppe bestehend aus einem Rheologiemodifizierer, einem Nuancierfarbstoff, einem optischen Aufheller, einem Träger für einen optischen Aufheller, einem Flockungsmittel, einem Entlüfter und einem Oberflächenenergiermodifizierer oder eine Kombination aus mindestens zwei davon. Ein bevorzugter Entlüfter ist ein Streichfarbenentlüfter, bevorzugt auf Silikonbasis oder auf Fettsäurebasis oder beides. Ein bevorzugter Oberflächenenergiemodifizierer ist ein Tensid.

### Verpackungsvorläufer

Ein Verpackungsvorläufer ist eine in der Herstellung eines geschlossenen Behälters entstehende Vorstufe des geschlossenen Behälters. Hierbei beinhaltet der Verpackungsvorläufer den flächenförmigen Verbund als Zuschnitt. Hierbei kann der flächenförmige Verbund ungefaltet oder gefaltet sein. Ein bevorzugter Verpackungsvorläufer ist zugeschnitten und ausgebildet zum Herstellen eines einzelnen geschlossenen Behälters. Ein bevorzugter Verpackungsvorläufer, welcher zugeschnitten und ausgebildet ist zum Herstellen eines einzelnen geschlossenen Behälters, wird auch als Mantel oder Sleeve bezeichnet. Hierbei beinhaltet der Mantel oder Sleeve den flächenförmigen Verbund gefaltet. Ferner beinhaltet der Mantel oder Sleeve eine Längsnaht und ist in einen Kopfbereich und einem Bodenbereich offen. Ein typischer Verpackungsvorläufer, welcher zugeschnitten und ausgebildet ist zum Herstellen einer Vielzahl von geschlossenen Behältern, wird oft als Schlauch bezeichnet.

Ein weiterer bevorzugter Verpackungsvorläufer ist offen, bevorzugt in einem Kopfbereich oder einem Kopfbereich, besonders bevorzugt in beiden. Ein bevorzugter Verpackungsvorläufer ist mantelförmig oder schlauchförmig oder beides. Ein weiterer bevorzugter Verpackungsvorläufer beinhaltet den bedruckten flächenförmigen Verbund so, dass der bedruckte flächenförmige Verbund mindestens 1 mal, bevorzugt mindestens 2 mal, bevorzugter mindestens 3 mal, am bevorzugtesten mindestens 4 mal, gefaltet ist. Ein bevorzugter Verpackungsvorläufer ist einstückig ausgebildet. Besonders bevorzugt ist ein Bodenbereich des Verpackungsvorläufers einstückig mit einem lateralen Bereich des Verpackungsvorläufers ausgebildet.

### Behälter

Allgemein dient der Behälter hier zum Aufnehmen von Nahrungsmitteln. Der hierin offenbarte geschlossene Behälter kann eine Vielzahl von unterschiedlichen Formen aufweisen, bevorzugt ist jedoch eine im Wesentlichen quaderförmige Struktur. Weiterhin kann der Behälter vollflächig aus dem flächenförmigen Verbund gebildet sein, oder einen 2- oder mehrteiligen Aufbau aufweisen. Bei einem mehrteiligen Aufbau ist es denkbar, dass neben dem flächenförmigen Verbund auch andere Materialien zum Einsatz kommen, beispielsweise Plastik, welches insbesondere in den Kopf oder Bodenbereichen des Behälters zum Einsatz kommen können. Hierbei ist es jedoch bevorzugt, dass der Behälter zu mindestens 50 %, besonders bevorzugt zu mindestens 70 % und darüber hinaus bevorzugt zu mindestens 90 % der Fläche aus dem flächenförmigen Verbund aufgebaut ist. Weiterhin kann der Behälter eine Vorrichtung zum Entleeren des Inhalts aufweisen. Diese kann beispielsweise aus einem Polymer oder Mischung von Polymeren geformt und an der Behälteraußenoberfläche aufgebracht werden. Denkbar ist auch, dass diese Vorrichtung durch *"direct injection molding"* in den Behälter integriert ist. Gemäß einer bevorzugten Ausgestaltung weist der Behälter mindestens eine, bevorzugt von 4 bis 22 oder auch mehr Kanten, besonders bevorzugt von 7 bis 12 Kanten auf. Als Kante werden im Rahmen der vorliegenden Offenbarung Bereiche verstanden, die beim Falten einer Fläche entstehen. Als beispielhafte Kanten seien die länglichen Berührungsbereiche von jeweils zwei Wandflächen des Behälters, hierin auch als Längskanten bezeichnet, genannt. In dem Behälter stellen die Behälterwände vorzugsweise die von den Kanten eingerahmten Flächen des Behälters dar. Bevorzugt beinhaltet der Innenraum eines Behälters ein Nahrungsmittel. Bevorzugt beinhaltet der geschlossene Behälter keinen nicht einstückig mit dem flächenförmigen Verbund ausgebildeten Deckel oder Boden oder beides. Ein bevorzugter geschlossener Behälter beinhaltet ein Nahrungsmittel.

### Nahrungsmittel

Ein bevorzugter geschlossener Behälter beinhaltet ein Nahrungsmittel. Als Nahrungsmittel kommen alle dem Fachmann bekannten Nahrungsmittel für den menschlichen Verzehr und auch Tierfutter in Betracht. Bevorzugte Nahrungsmittel sind oberhalb 5°C flüssig, beispielsweise Milchprodukte, Suppen, Saucen, nichtkohlensäurehaltige Getränke. Das Befüllen des Behälters oder des Verpackungsvorläufers kann auf verschiedene Weise erfolgen. Zum einen können das Nahrungsmittel und der Behälter oder der Verpackungsvorläufer getrennt vor dem Befüllen durch geeignete Maßnahmen wie der Behandlung des Behälters oder des Verpackungsvorläufers mit H₂O₂, UV-Strahlung oder anderer geeigneter energiereicher Strahlung, Plasmabehandlung oder einer Kombination aus mindestens zwei davon, sowie dem Erhitzen des Nahrungsmittels möglichst weitestgehend entkeimt werden und anschließend in den Behälter oder den Verpackungsvorläufer gefüllt werden. Diese Art des Befüllens wird häufig als "aseptisches Füllen" bezeichnet und ist bevorzugt. Es ist ferner zusätzlich oder auch anstelle des aseptischen Füllens weit verbreitet, dass der mit Nahrungsmittel gefüllte Behälter oder Verpackungsvorläufer zum Verringern der Keimzahl erhitzt wird. Dieses erfolgt vorzugsweise durch Pasteurisieren oder Autoklavieren. Bei dieser Vorgehensweise können auch weniger sterile Nahrungsmittel und Behälter oder Verpackungsvorläufer eingesetzt werden.

### Loch / Öffnungshilfe

Um das Öffnen des geschlossenen Behälters zu erleichtern, kann eine Verbundträgerschicht mindestens ein Loch aufweisen. In einer besonderen Ausgestaltung ist das Loch mindestens mit einer Barriereschicht, und bevorzugt einer Polymerschicht, als Lochdeckschichten überdeckt. Ferner können zwischen den bereits genannten Schichten eine oder mehrere weitere Schichten, insbesondere Haftvermittlerschichten, vorgesehen sein. Hierbei ist es bevorzugt, dass die Lochdeckschichten mindestens teilweise, vorzugsweise zu mindestens 30%, bevorzugt mindestens 70% und besonders bevorzugt zu mindestens 90% der durch das Loch gebildeten Fläche miteinander verbunden sind. Gemäß einer besonderen Ausgestaltung ist es bevorzugt, dass das Loch den gesamten flächenförmigen Verbund durchdringt und durch einen das Loch verschließenden Verschluss bzw. Öffnungsvorrichtung überdeckt wird. Im Zusammenhang mit einer bevorzugten Ausführungsform kann das in der Verbundträgerschicht vorgesehene Loch jede dem Fachmann bekannte und für verschiedene Verschlüsse, Trinkhalme oder Öffnungshilfen geeignete Form haben. Meist erfolgt ein Öffnen eines geschlossenen Behälters durch mindestens teilweises Zerstören der das Loch überdeckenden Lochdeckschichten. Dieses Zerstören kann durch Schneiden, Eindrücken in den Behälter oder Herausziehen aus dem Behälter erfolgen. Das Zerstören kann durch ein mit dem Behälter verbundenen und im Bereich des Lochs, meist oberhalb des Lochs angeordneten, öffenbaren Verschluss oder einen Trinkhalm, der durch die das Loch bedeckenden Lochdeckschichten gestoßen wird, erfolgen.

Gemäß einer weiteren bevorzugten Ausführungsform weist eine Verbundträgerschicht des flächenförmigen Verbunds eine Vielzahl von Löchern in Form einer Perforation auf, wobei die einzelnen Löcher mindestens mit einer Barriereschicht, und vorzugsweise einer Polymerschicht, als Lochdeckschichten überdeckt sind. Ein aus einem solchen Verbund hergestellter Behälter kann dann durch Aufreißen entlang der Perforation geöffnet werden. Derartige Löcher für Perforationen werden bevorzugt mittels eines Lasers erzeugt. Besonders bevorzugt ist der Einsatz von Laserstrahlen, wenn eine Metallfolie oder eine metallisierte Folie als Barriereschicht eingesetzt wird. Es ist ferner möglich, dass die Perforation durch mechanische, meist Klingen aufweisende, Perforationswerkzeuge eingebracht wird.

Gemäß einer weiteren bevorzugten Ausführungsform wird der flächenförmige Verbund mindestens im Bereich des mindestens einen Lochs einer thermischen Behandlung unterzogen, Im Fall von mehreren in Form einer Perforation vorliegenden Löchern in der Verbundträgerschicht ist es insbesondere bevorzugt, diese thermische Behandlung auch um den Randbereich des Loches herum durchzuführen. Die thermische Behandlung kann durch Strahlung, durch Heißgas, durch einen Feststoffwärmekontakt, durch mechanische Schwingungen, bevorzugt durch Ultraschall, oder durch eine Kombination von mindestens zwei dieser Maßnahmen erfolgen. Besonders bevorzugt erfolgt die thermische Behandlung durch Bestrahlung, bevorzugt elektromagnetische Strahlung und insbesondere bevorzugt elektromagnetische Induktion oder auch durch Heißgas. Die jeweils zu wählenden, optimalen Betriebsparameter sind dem Durchschnittsfachmann bekannt.

### Erzeugen einer Faltung

Eine Faltung wird vorzugsweise entlang einer Rillung erzeugt, sofern ein Innenwinkel, den entlang der Rillung aneinander angrenzende Faltbereiche des flächenförmigen Verbunds einschließen, erstmalig durch Falten um mindestens 10° von 180° abweicht. Im Zuge der Erzeugung der Faltung durch erstmaliges Falten um mindestens 10° entlang der Rillung wie vorstehend beschrieben wird insbesondere die Trägerschicht entlang der Faltung geschwächt.

### Innensiegelung

Die Innensiegelung stellt die Siegelung zwischen Verbundkunststoffschicht im Bereich des ersten Verbundrandbereichs und der Verbundkunststoffschicht im Bereich des zweiten Verbundrandbereichs da. Eine bevorzugte Innensiegelung hat keine Taschen oder Unebenheiten entlang der Siegelnaht. Weiterhin hat eine bevorzugte Innensiegelung eine maximale Nahtfestigkeit von mindestens 10 N/15mm.

### Außensiegelung

Die Außensiegelung stellt die Siegelung zwischen der Außenfarbschicht im Bereich des ersten Verbundrandbereichs und der Verbundkunststoffschicht im Bereich des zweiten Verbundrandbereichs da. Eine bevorzugte Außensiegelung wird durch eine Kombination von Temperatur-Ionisationsbehandlung erhalten. Weiterhin hat eine bevorzugte Außensiegelung eine maximale Nahtfestigkeit von mindestens 50 N/15mm.

### Farbmittel

Farbmittel dienen allgemein dem Anbringen von Dekoren, Zahlen oder Buchstaben an der Außenseite des flächenförmigen Verbunds. Farbmittel ist nach DIN 55943:2001-10 die Sammelbezeichnung für alle farbgebenden Stoffe, insbesondere für Farbstoffe und Pigmente. Ein bevorzugtes Farbmittel ist ein Pigment. Ein bevorzugtes Pigment ist ein organisches Pigment. Im Zusammenhang mit der Erfindung beachtliche Pigmente sind insbesondere die in der DIN 55943:2001-10 und die in "Industrial Organic Pigments, Third Edition." (Willy Herbst, Klaus Hunger Copyright © 2004 WILEY-VCH Verlag GmbH & Co. KGaA, Weinheim ISBN: 3-527-30576-9) erwähnten Pigmente. Oft sind derartige Pigmente in Druckfarben formuliert, in denen neben den Pigmenten Wachse, Öle, Thixotropierungsmittel und andere für Druckfarben übliche Bestandteile vorgesehen sind.

### MESSMETHODEN

Die folgenden Messmethoden wurden im Rahmen der Erfindung benutzt. Sofern nichts anderes angegeben ist wurden die Messungen bei einer Umgebungstemperatur von 25°C, einem Umgebungsluftdruck von 100 kPa (0,986 atm) und einer relativen Luftfeuchtigkeit von 50 % durchgeführt.

### MFR-Wert

Der MFR-Wert wird gemäß der Normen DINEN ISO 1133-1 (2012-03) und DIN EN ISO 1133-2 (2012-03) (sofern nicht anders genannt bei 190°C und 2,16 kg) gemessen.

### Dichte

Die Dichte wird gemäß der Norm DIN EN ISO 1183-1 (2013-04) gemessen.

### Schmelztemperatur

Die Schmelztemperatur wird anhand der DSC Methode DIN EN ISO 11357-1, -5 (2010-03) bestimmt. Die Gerätekalibrierung erfolgt gemäß den Herstellerangaben anhand folgender Messungen:
- Temperatur Indium - Onset Temperatur,
- Schmelzwärme Indium,
- Temperatur Zink - Onset Temperatur.

### Viskositätszahl von PA

Die Viskositätszahl von PA wird nach der Norm DIN EN ISO 307 (2013-08) in 95% Schwefelsäure gemessen.

### Sauerstoffpermeationsrate

Die Sauerstoffpermeationsrate wird gemäß der Norm DIN 53380 (1998-07) bei 20°C und 50% relativer Luftfeuchte bestimmt.

### Feuchtegehalts des Karton

Der Feuchtegehalt des Karton wird nach der Norm ISO 287:2009 gemessen.

### Haftung

Zur Bestimmung der Haftung zweier benachbarter Schichten werden diese auf ein 90° Peel Test Gerät, beispielsweise der Firma Instron *"German rotating wheel fixture",* auf einer drehbaren Walze fixiert, die sich während der Messung mit 40 mm/min dreht. Die Proben wurden zuvor in 15 mm breite Streifen zugeschnitten. An einer Seite der Probe werden die Lagen voneinander gelöst und das abgelöste Ende in eine senkrecht nach oben gerichtete Zugvorrichtung eingespannt. An der Zugvorrichtung ist ein Messgerät zum Bestimmen der Zugkraft angebracht. Die beim Drehen der Walze wird die Kraft gemessen die nötig ist, um die Lagen voneinander zu trennen. Diese Kraft entspricht der Haftung der Schichten zueinander und wird in N/15 mm angegeben. Die Trennung der einzelnen Schichten kann beispielsweise mechanisch, oder durch eine gezielte Vorbehandlung, beispielsweise durch Einweichen der Probe für 3 min in 60°C warmer, 30 %-iger Essigsäure erfolgen.

### Molekulargewichtsverteilung

Die Molekulargewichtsverteilung wird nach der Gelpermeationschromatographie mittels Lichtstreuung: ISO 16014-3/-5 (2009-09) gemessen.

### Steriltest

Zur Durchführung des Steriltests werden die Verpackungsvorläufer (1000) in einer Füllmaschine aufgefaltet, der Bodenbereich (1104) gebildet, mit einem Nahrungsmittel (1201) gefüllt und abschließend der Kopfbereich (1104) gebildet. Dabei erfolgt das Bilden des Bodenbereichs durch ein Verschließen des Bodenbereichs (1104) mit Heißluft und das Bilden des Kopfbereichs (1103) mittels Siegeln mit Ultraschall in einer Füllmaschine (z.B. CFA712, SIG Combibloc, Deutschland). Es werden 1000 Verpackungsbehälter zwischen dem Siegeln des Bodenbereichs mit Heißluft und dem Verschließen des Kopfbereichs mit Ultraschall in einer Aseptikzone mit Magermilch gefüllt.

Benötigte Hilfsmittel für die Laboruntersuchungen:
Lötkolben 100 oder 150 W
Pipetten 0,1 - 1 ml
Petrischalen-Plastik 9 cm Ø
Brutschrank (30 °C)
Plate Count Agar (Merck 105 463, Oxoid CM 325, Difco 247940) sterile Werkbank

### Probenahme:

Bevor die Laboruntersuchung durchgeführt wird, müssen die mit Magermilch gefüllten Packungsbehälter mindestens 3 Tage bei 30 °C bebrütet worden sein. Die zu untersuchenden Packungsbehälter werden am Giebel mit Alkohol desinfiziert und anschließend mit einem heißen Lötkolben geöffnet. Durch die Öffnung werden 0,1 ml Milch entnommen und in eine sterile Petrischale gegeben, die mit ca. 10 ml Plate Count Agar gefüllt wird. Nach Durchmischung und Festwerden des Agars werden die Petrischalen bei 30 und 55 °C für mindestens 48 h bebrütet und auf Wachstum überprüft. Die Petrischalen sind über Kopf zu bebrüten, damit Kondenswasserbildung auf dem Nährboden vermeiden wird. Die Kolonie bildende Einheiten (KBE) können dann mit dem Auge oder Mikroskop identifiziert werden. Werden bei den Laboruntersuchungen nicht mehr als zehn KBE pro Petrischale gefunden, dann gilt die Probe als steril. Werden bei den Laboruntersuchungen mehr als zehn KBE pro Petrischale gefunden ist, dann gilt der Packungsbehälter als verkeimt.

### Nahtfestigkeit der Außensiegelung und Innensiegelung

### Prüfmittel:

Hebelsicherheitsschneidemaschine
Universal Zugprüfmaschine TIRA test 27025

### Probenentnahme und Vorbereitung:

Zunächst wird die Packung entleert, gesäubert, geteilt und getrocknet. Mittels der Hebelsicherheitsschneidemaschine werden jeweils 3 Proben (1400) für die Messung Außensiegelung und der Innensiegelung für die Nahtfestigkeit aus dem zu prüfenden Mantel mit einer Länge von 50mm und eine Breite von 15mm herausgeschnitten.
Für die Messung der Nahtfestigkeit der Innensiegelung wird die Außensiegelung von Hand geöffnet und die Proben anschließend vermessen.

### Prüfmerkmal:

Die Proben werden mit den 15mm Kanten in die Universalzugprüfmaschine (Kraftaufnehmer: 1kN) eingespannt und mit einer Geschwindigkeit von 40 mm/Min gezogen. Dabei wird das Kraft/Weg-Diagramm aufgezeichnet. Die Einspannlänge beträgt 35mm, der Prüfweg 15mm.

### Ergebnis:

Aus den 3 Proben wird das arithmetische Mittel der Maximalkraft der Kraft-Weg-Kurve gebildet.

Die Erfindung wird nun durch nicht limitierende Beispiele und Figuren verdeutlicht.

### BEISPIELE

### Herstellung des flächenförmigen Verbundes

Die Herstellung der flächenförmigen Verbunde der Beispiele und Vergleichsbeispiele erfolgt mit der folgenden Schichtfolge durch ein Schichtextrusionsverfahren mit einer handelsüblichen Extrusionsbeschichtungsanlage (Firma Davis Standard, LLC, USA). Im ersten Schritt wird die Polymeraußenschicht auf die Verbundträgerschicht aufgebracht. In einem weiteren Schritt wird eine Verbundkunststoffschicht auf der der Polymeraußenschicht abgewandter Seite der Verbundträgerschicht aufgebracht. Zum Aufbringen der einzelnen Kunststoffschichten werden die Polymere oder Polymerblends in einem Extruder ausgeschmolzen. Beim Aufbringen eines Polymers oder Polymerblends in einer Schicht wird die entstandene Schmelze über einen Feedblock in eine Düse überführt und auf die Trägerschicht extrudiert. Beim Aufbringen von mehreren Polymeren oder Polymerblends in einer Schicht werden die entstandenen Schmelzen über einen Feedblock zusammengeführt und dann gemeinsam auf die Trägerschicht extrudiert. Zur Herstellung des flächenförmigen Verbunds (200) wurde als Verbundträgerschicht (202, 207, 208, 210, 211, 212) ein liquid packaging board (Natura T Duplex Doppelstrich, Fa. Stora Enso, Schweden) verwendet. Die Polymeraußenschicht besteht aus einem LDPE (Typ 19N430, Ineos, Deutschland). Alle vorgenannten Verbundkunststoffschichten bestehen aus einer Mischung eines LDPEs (70 Gew.-% 19N430, Ineos, Deutschland) und eines mPEs (30 Gew.-%, Affinity 1451, Dow, Belgien).

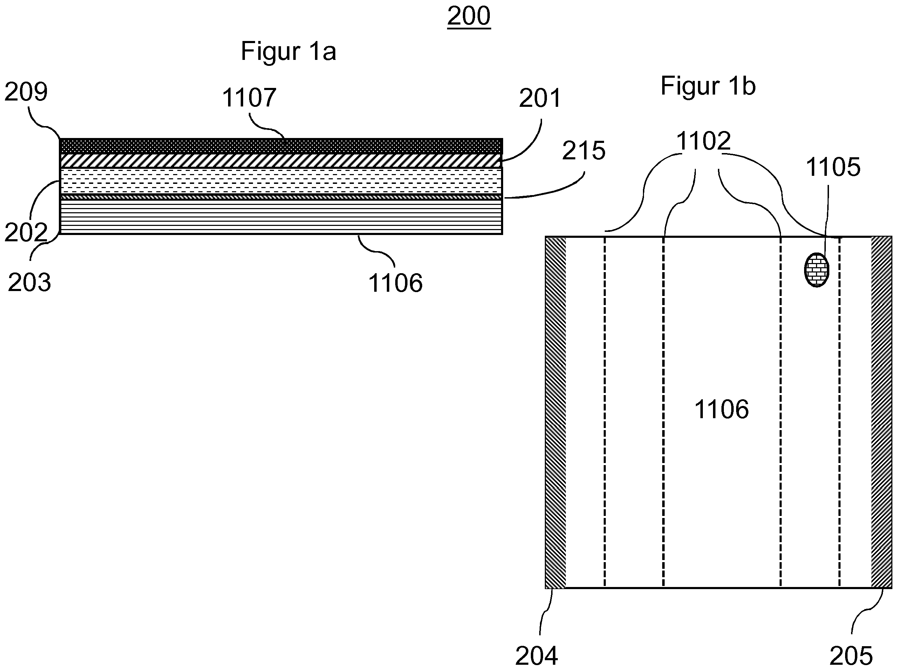

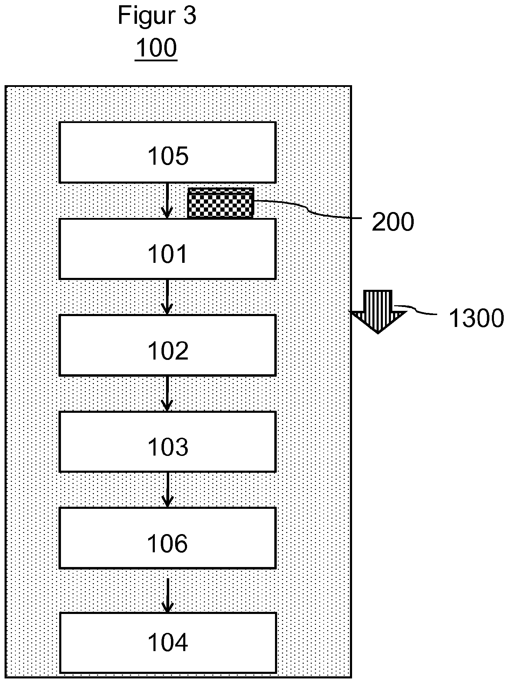

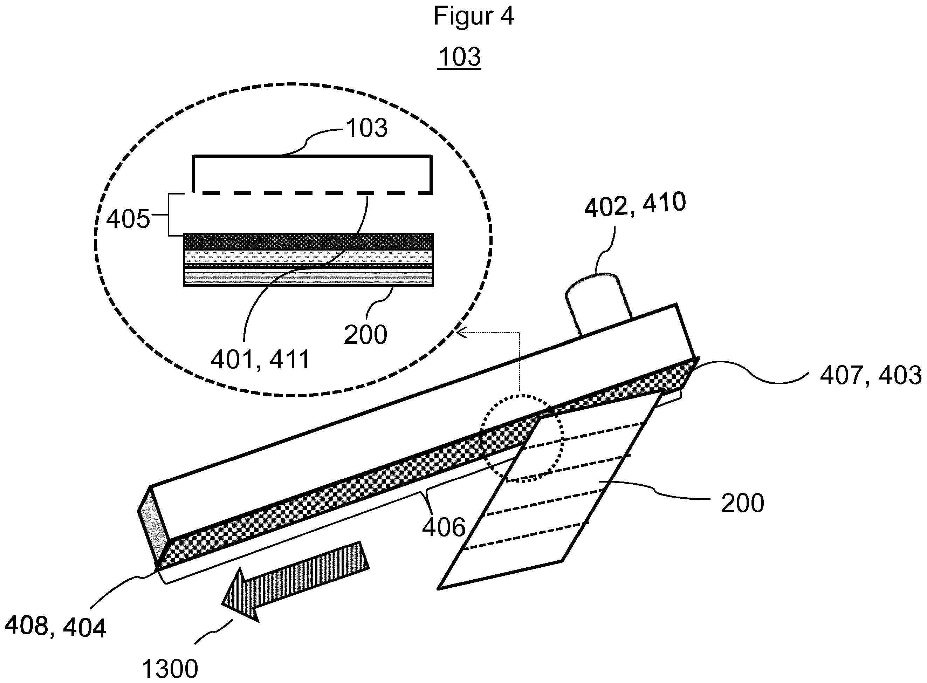

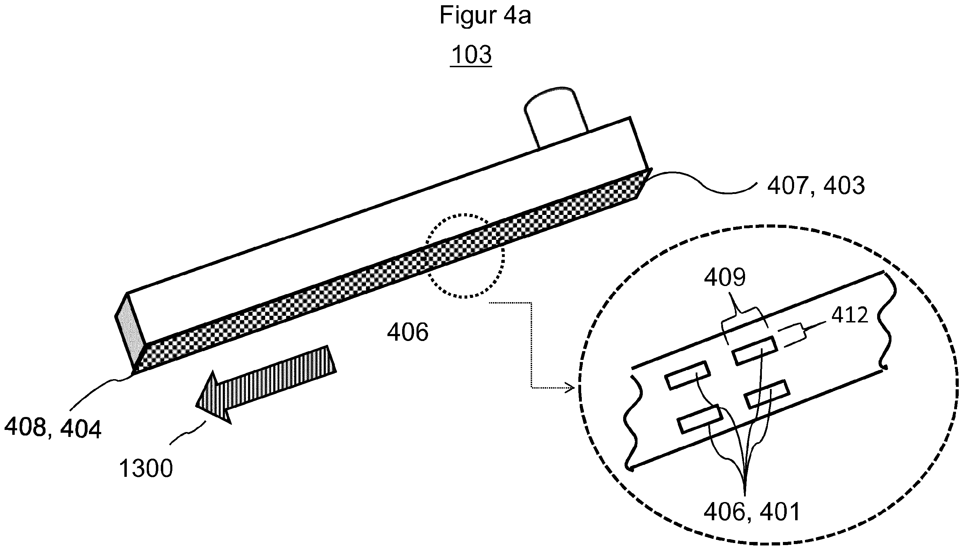

In einem weiteren Prozessschritt wird die Polymeraußenschicht mit einer Verbundfarbschicht mit Hilfe eines Tiefdruckverfahrens bedeckt (vgl. Figur 1a). Die Verbundfarbschicht (209) besteht aus einem Tiefdruckfarbsystem (MAS, Hartmann, Deutschland). Anschließend wird der flächenförmige Verbund mit Rillungen versehen und in die Dimensionen eines einzelnen Behälters geschnitten (vgl. Figur 1b). Der flächenförmige Verbund wird daraufhin einer Faltschachtel-Klebemaschine zugeführt (vgl. Figur 3 und 4). Es wird eine Faltschachtel-Klebemaschine Diana, Fa. Heidelberg, Heidelberg, Deutschland eingesetzt, die gemäß der nachfolgenden Angaben mit einer Vereinzelungseinrichtung (105), einer Transporteinrichtung (101), einer Schäleinrichtung (102), einer Erhitzungseinrichtung (103), einer Ionisierungseinrichtung (106) und einer Kontaktierungseinrichtung (104) zur Herstellung eines hierin offenbarten Verpackungsvorläufer modifiziert wurde.

**Tabelle 1: Charakterisierung von Behältervorläuferherstellungsverfahren gemäß Beispielen und Vergleichsbeispielen**

| | Temperatur T1 (403) [°C] | Temperatur Tn (404) [°C] | Abstand erstes (407) und letztes (408) Energieabgabesegment [cm] | Verhältnis Länge (409) [mm]/Breite (412) [mm] des Energieabgabesegment in Stromrichtung | Innerquerschnittsfläche des Eintrittbereichs (410) [mm2] | Summe der Innerquerschnitts fläche der Austrittsöffnungen (411) [mm2] |
|---|---|---|---|---|---|---|
| Vergleichsbei - spiel 1 | 440 | 480 | 100 | 10 | 800 | 250 |
| Vergleichsbei - spiel 2 | 480 | 480 | 100 | 10 | 800 | 250 |
| Vergleichsbei - spiel 3 | 480 | 460 | 30 | 10 | 800 | 80 |
| Vergleichsbei - spiel 4 | 480 | 470 | 10 | 10 | 800 | 25 |
| Vergleichsbei - spiel 5 | 480 | 440 | 100 | 0,6 | 800 | 250 |
| Vergleichsbei - spiel 6 | 480 | 440 | 100 | 0,2 | 800 | 250 |
| Vergleichsbei - spiel 7 | 480 | 440 | 100 | 10 | 200 | 250 |
| Vergleichsbei - spiel 8 | 480 | 440 | 100 | 10 | 100 | 250 |
| Beispiel 1 | 480 | 450 | 50 | 10 | 500 | 120 |
| Beispiel 2 | 480 | 440 | 100 | 10 | 800 | 250 |
| Beispiel 3 | 480 | 435 | 120 | 10 | 900 | 300 |
| Beispiel 4 | 480 | 420 | 145 | 10 | 1000 | 360 |
| Beispiel 5 | 480 | 410 | 200 | 15 | 1200 | 500 |
| Beispiel 6 | 480 | 440 | 100 | 15 | 800 | 250 |

**Tabelle 2: Charakterisierung von Behältervorläufern und Behälterherstellungsverfahren gemäß Beispielen und Vergleichsbeispielen**

| | Max. Nahtfestigkeit Innensiegelung [N/15mm] | Max. Nahtfestigkeit Außensiegelung [N/15mm] | verkeimte Packungsbehälter pro 1000 Verpackungsvorläufer | fehlerhafte Produktion pro 1000 Verpackungsvorläufer | max. Produktionsgeschwindigkeit [m/min] |
|---|---|---|---|---|---|
| Vergleichsbeispiel 1 | 3 | 17 | 34 | 365 | 120 |
| Vergleichsbeispiel 2 | 4 | 18 | 45 | 255 | 123 |
| Vergleichsbeispiel 3 | 3 | 16 | 5 | 450 | 115 |
| Vergleichsbeispiel 4 | 1 | 12 | 27 | 570 | 90 |
| Vergleichsbeispiel 5 | 5 | 35 | 5 | 180 | 205 |
| Vergleichsbeispiel 6 | 4 | 15 | 25 | 340 | 140 |
| Vergleichsbeispiel 7 | 5 | 16 | 7 | 125 | 240 |
| Vergleichsbeispiel 8 | 2 | 14 | 31 | 180 | 175 |
| Beispiel 1 | 13 | 123 | 0 | 4 | 400 |
| Beispiel 2 | 21 | 156 | 0 | 0 | 550 |
| Beispiel 3 | 23 | 187 | 0 | 0 | 530 |
| Beispiel 4 | 20 | 165 | 0 | 2 | 500 |
| Beispiel 5 | 28 | 167 | 0 | 1 | 490 |
| Beispiel 6 | 24 | 181 | 0 | 0 | 550 |

Die fehlerhafte Produktion stellt sich vorwiegend durch eine nicht ausreichende Außensiegelung dar. Dadurch kommt es zu Fehlern beim Transport der Verpackungsvorläufern aber auch zur Verschmutzung durch Abrieb an den Bestandteilen der Vorrichtung.

Aus Tabelle 1 und 2 ist zu entnehmen, dass die Beispiele vorteilhafte Effekte gegenüber den Vergleichsbeispielen darstellen. So ist es möglich Behältervorläufer mit einer größeren Nahtfestigkeit der Innen- und Außensiegelung herzustellen. Weiterhin sind die gefüllten Behälter der Beispiele weniger verkeimt als die Vergleichsbehälter und es ist möglich Verpackungsvorläufer bei höheren Produktionsgeschwindigkeiten mit geringeren Fehlerraten zu produzieren.

### FIGUREN

Es zeigen jeweils sofern nicht anders in der Beschreibung oder der jeweiligen Figur angegeben schematisch und nicht maßstabsgetreu:
- Figur 1a: einen schematischen Querschnitt eines flächenförmigen Verbundes
- Figur 1b: eine schematische Aufsicht eines flächenförmigen Verbundes
- Figur 2: eine erfindungsgemäße Vorrichtung
- Figur 3: eine weitere erfindungsgemäße Vorrichtung
- Figur 4: eine schematische Darstellung der Erhitzungseinrichtung
- Figur 4a: eine schematische Darstellung der Form der Austrittsöffnungen
- Figur 5: ein Ablaufdiagramm eines erfindungsgemäßen Verfahrens
- Figur 6: ein Ablaufdiagramm eines weiteren erfindungsgemäßen Verfahrens
- Figur 7: einen Behältervorläufer in Draufsicht (stehend)
- Figur 8: einen schematischen Querschnitt eines Behältervorläufers im Bereich der Längsnaht
- Figur 9: einen schematischen Querschnitt eines Behältervorläufers im Bereich der Längsnaht zur Darstellung der Außensiegelung und der Innensiegelung
- Figur 10: einen geschlossenen Behälter

In Figur 1a ist ein flächenförmiger Verbund (200) im Querschnitt dargestellt. Der flächenförmige Verbund (200) beinhaltet als Schichtenfolge von einer Außenoberfläche (1107), die in dem fertigen Behälter der Umgebung zugewandt ist, des flächenförmigen Verbundes zu einer Innenoberfläche, die in dem fertigen Behälter dem von dem Behälter aufgenommenen Nahrungsmittel zugewandt ist, des flächenförmigen Verbundes (1106), eine Verbundfarbschicht (209), eine Polymeraußenschicht (201) aus LDPE, eine Verbundträgerschicht (202) aus Karton, eine Barriereschicht (215) und eine Verbundkunststoffschicht (203) aus LDPE. Weiterhin zeigt Figur 1b eine Aufsicht des mit Rillungen (1102) versehenen und geschnittenen flächenförmigen Verbund (200), bevor er die erfindungsgemäße Vorrichtung (100) durchläuft mit dem ersten Verbundrandbereich (204) und dem zweiten Verbundrandbereich (205), sowie einem überbeschichtetem Loch (1105).

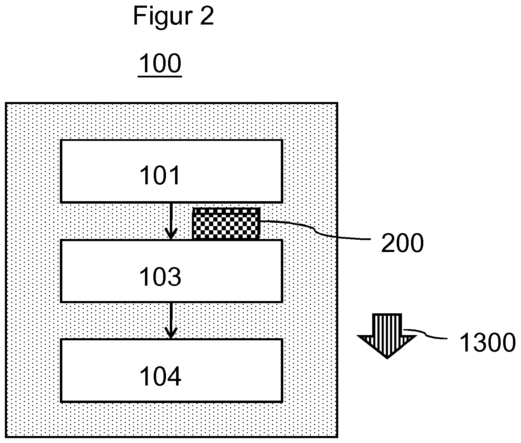

Figur 2 zeigt eine erste Ausführungsform der erfindungsgemäßen Vorrichtung (100). Die Vorrichtung besteht aus einer modifizierten Faltschachtel-Klebemaschine Diana, Fa. Heidelberg, Heidelberg, Deutschland. Die Vorrichtung (100) beinhaltet einen flächenförmigen Verbund (200), welcher die Schichtfolge nach Figur 1a beinhaltet. Ferner beinhaltet der flächenförmige Verbund (200) einen ersten Verbundrandbereich (204) und einen zweiten Verbundrandbereich (205) wie in Figur 1b gezeigt. Weiter beinhaltet die Vorrichtung (100) eine Mehrzahl von Antriebsriemen zum Transport des flächenförmigen Verbunds (200), welche ausgebildet sind, zum Transportieren des flächenförmigen Verbunds (200) in Stromrichtung (1300) zu einer ersten Erhitzungseinrichtung (103). Der Transport erfolgt bei 300 m/min. Die erste Erhitzungseinrichtung (103) ist ausgebildet zum Erhitzen des ersten Verbundrandbereichs (204). Diese erste Erhitzungseinrichtung (103) ist eine Heißluftdüse aus Edelstahl wie in Figur 4 dargestellt. Die Heißluftdüse ist 100 cm lang und ist ausgebildet mit 70 Austrittsöffnungen (401), die ein Länge (mm)/Breite (mm)-Verhältnis von 10 haben. Der Innenquerschnitt des Eintrittsbereichs (410) beträgt 500 mm² und die Summe der Innenquerschnittsflächen der Austrittsöffnungen (411) beträgt 120 mm². Der flächenförmige Verbund wird dann weiter mit einer Vielzahl von Antriebsriemen zu einer Kontaktierungseinrichtung (104) transportiert. Die Kontaktierungseinrichtung (104) ist ausgebildet zum Kontaktieren des ersten Verbundrandbereichs (204) mit dem zweiten Verbundrandbereichs (205). Die Kontaktierungseinrichtung (104) ist eine Siegelstation, die den ersten Verbundrandbereich (204) und den zweiten Verbundrandbereich (205) miteinander versiegelt. Dazu werden die beiden Verbundrandbereiche in der Siegelstation aufeinander gepresst.

Figur 3 zeigt eine weitere Ausführung der erfindungsgemäßen Vorrichtung (100). Die Vorrichtung besteht aus einer modifizierten Faltschachtel-Klebemaschine Diana, Fa. Heidelberg, Heidelberg, Deutschland. Die Vorrichtung (100) beinhaltet einen flächenförmigen Verbund (200), welcher die Schichtfolge nach Figur 1a beinhaltet. Ferner beinhaltet der flächenförmige Verbund (200) einen ersten Verbundrandbereich (204) und einen zweiter Verbundrandbereich (205) wie in Figur 1b gezeigt. Weiter beinhaltet die Vorrichtung (100) in Stromrichtung (1300) eine Vereinzelungseinrichtung (105), welche ein Abziehen eines flächenförmigen Verbundes von einer Vielzahl gestapelter flächenförmiger Verbunde ermöglicht. Die Vereinzelungseinrichtung (105) ist ein Einleger, welcher die Zuführung des flächenförmigen Verbunds (200) zur Transporteinrichtung (101) sicherstellt. Die Transporteinrichtung (101) ist ausgebildet, zum Transportieren des flächenförmigen Verbunds (200) und besteht aus einer Vielzahl von Transportriemen. Die Transporteinrichtung (101) transportiert den flächenförmigen Verbund (200) zu einer Schäleinrichtung (102). Die Schäleinrichtung (102) ist eine VN 50, Fortuna GmbH, Weil der Stadt, Deutschland, und ausgebildet zum Verringern der Verbundträgerschicht (202) und der Polymeraußenschicht (201) im ersten Verbundrandbereich (204). Weiter wird der flächenförmige Verbund (200)zu einer ersten Erhitzungseinrichtung (103) transportiert. Die erste Erhitzungseinrichtung (103) ist ausgebildet zum Erhitzen des ersten Verbundrandbereichs (204). Die erste Erhitzungseinrichtung (103) ist eine Heißluftdüse aus Edelstahl wie in Figur 4 dargestellt. Die Heißluftdüse ist 100 cm lang und ist ausgebildet mit 70 Austrittsöffnungen (401), die ein Länge (mm)/Breite (mm)-Verhältnis von 10 haben. Der Innenquerschnitt des Eintrittbereichs (410) beträgt 500 mm² und die Summe der Innenquerschnittsflächen der Austrittsöffnungen (411) beträgt 120 mm². Weiter wird der flächenförmige Verbund (200) zu einer Ionisierungseinrichtung (106) transportiert. Die Ionisierungseinrichtung (106) ist eine Plasmadüse der Fa. Plasmatreat GmbH, Steinhagen, Deutschland, und ausgebildet zum Ionisieren der in der Erhitzungseinrichtung (103) erzeugten Polyolefinschmelze des flächenförmigen Verbundes (200). Daraufhin wird der flächenförmige Verbund (200) zu einer Kontaktierungseinrichtung (104) transportiert. Die Kontaktierungseinrichtung (104) ist ausgebildet zum Kontaktieren des ersten Verbundrandbereichs (204) mit dem zweiten Verbundrandbereichs (205). Die Kontaktierungseinrichtung (104) ist eine Siegelstation, die den ersten Verbundrandbereich (204) und den zweiten Verbundrandbereich (205) miteinander versiegelt. Dazu werden die beiden Verbundbandbereiche in der Siegelstation aufeinander gepresst.

Figur 4 zeigt schematisch die Erhitzungseinrichtung (103) der erfindungsgemäßen Vorrichtung (100). In der Erhitzungseinrichtung (103) sind 80 Energieabgabesegmente (406) lateral zur Stromrichtung des flächenförmigen Verbunds (200) angebracht. Wobei die Energieabgabesegmente (406) in Richtung der Transportoberfläche (111, nicht dargestellt) gerichtet sind. Zwischen den Energieabgabesegmenten (406) und der Transportoberfläche (111) bewegt sich der flächenförmige Verbund (200) in Stromrichtung (1300). Weiter beinhaltet die Erhitzungseinrichtung (103) eine Eintrittsöffnung (402) zur Aufnahme eines Heißgases (444), welches in diesem Beispiel elektrisch beheizte Umgebungsluft ist. Die Eintrittsöffnung (402) der Erhitzungseinrichtung (103) hat eine Innenquerschnittsfläche (410) von 800 mm². Weiterhin enthält die Erhitzungseinrichtung (103) ein erstes Energieabgabesegment (407) und in einem Abstand von 100 cm ein letztes Energieabgabesegment (408). Die Energieabgabesegmente sind in diesem Beispiel als Austrittsöffnungen (401) ausgebildet. Die Summe der Querschnittsflächen der Austrittsöffnungen (401, 411) beträgt 250 mm². Der flächenförmige Verbund (200) wird in einem Abstand (405) von 10 mm an den Austrittsöffnungen (401) der Erhitzungseinrichtung (103) vorbeigeführt. Die Temperatur T1 (403) beträgt 480°C. Die Temperatur Tn (404) beträgt 440°C.

Figur 4a zeigt schematisch die Erhitzungseinrichtung (103) der erfindungsgemäßen Vorrichtung (100). In der Erhitzungseinrichtung (103) sind 80 Energieabgabesegmente (406) lateral zur Stromrichtung des flächenförmigen Verbunds (200) angebracht. Wobei die Energieabgabesegmente (406) in Richtung der Transportoberfläche (111, nicht dargestellt) gerichtet sind. Die Energieabgabesegmente sind in diesem Beispiel als Austrittsöffnungen (401) ausgebildet. Die Länge der Austrittsöffnungen (409) beträgt 10 mm. Das Verhältnis der Länge (409) zur Breite (412) der Austrittsöffnung beträgt 10.

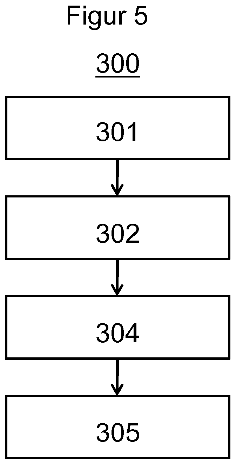

Figur 5 zeigt eine erste Ausführungsform eines erfindungsgemäßen Verfahrens (300) als Ablaufdiagramm. In einem Verfahrensschritt a) (301) des Verfahrens (300) wird ein flächenförmiger Verbund (200) bereitgestellt. Dieser beinhaltet als einander überlagernde Schichten eine Verbundfarbschicht (209), eine Polymeraußenschicht (201), eine Verbundträgerschicht (202), eine Barriereschicht (215) und eine Verbundkunststoffschicht (203) wie in Figur 1a gezeigt. Ferner beinhaltet der flächenförmige Verbund (200) wie in Figur 1b gezeigt einen ersten Verbundrandbereich (204) und einen zweiten Verbundrandbereich (205). In einem Verfahrensschritt b) (302) werden eine Vielzahl von flächenförmigen Verbunden (200) vereinzelt und der vereinzelte flächenförmige Verbund (200) auf eine Geschwindigkeit von 350 m/min beschleunigt. In Verfahrensschritt d) 304 wird durch Erhitzen mit Hilfe der Erhitzungseinrichtung (103) der erste Verbundrandbereich (204) bei einer Geschwindigkeit von 350 m/min auf eine Temperatur von 140°C erhitzt, wobei die Temperatur T1 (403) des Heißgases (444) am ersten Energieabgabesegment (407) der Erhitzungseinrichtung (103) 480°C beträgt und die Temperatur Tn (404) des Heißgases (444) am letzten Energieabgabesegment (408) der Erhitzungseinrichtung (103) stromab der Temperatur T1 (403) 440°C beträgt. In einem Verfahrensschritt e) 305 werden der erste Verbundrandbereich (204) und der zweite Verbundrandbereich (205) aufeinander gepresst, und miteinander versiegelt so dass der erste Überlappungsbereich (250) und der zweite Überlappungsbereich (260) gebildet werden. Somit wird aus dem ersten Überlappungsbereich (250) und dem zweiten Überlappungsbereich (260) eine Längsnaht (1001) erzeugt, wodurch aus dem gefalteten flächenförmigen Verbund (200) ein mantelförmiger Verpackungsvorläufer (1000) für einen einzelnen Behälter (1200) entsteht.

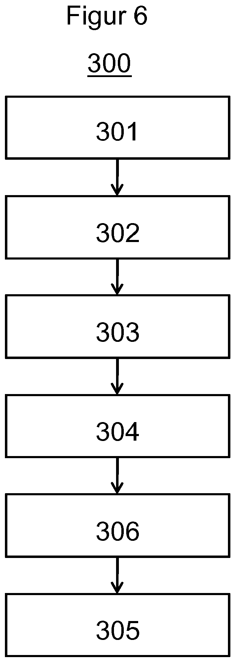

Figur 6 zeigt eine weitere Ausführungsform eines erfindungsgemäßen Verfahrens (300) als Ablaufdiagramm. In einem Verfahrensschritt a) (301) des Verfahrens (300) wird ein flächenförmiger Verbund (200) bereitgestellt. Dieser beinhaltet als einander überlagernde Schichten eine Verbundfarbschicht (209), eine Polymeraußenschicht (201), eine Verbundträgerschicht (202), eine Barriereschicht (215) und eine Verbundkunststoffschicht (203) wie in Figur 1a gezeigt. Ferner beinhaltet der flächenförmige Verbund (200) wie in Figur 1b gezeigt einen ersten Verbundrandbereich (204) und einen zweiten Verbundrandbereich (205). In einem Verfahrensschritt b) 302 werden eine Vielzahl von flächenförmigen Verbunden (200) vereinzelt und der einzelne flächenförmige Verbund (200) auf eine Geschwindigkeit von 450 m/min beschleunigt. In Verfahrensschritt c) 303 wird durch Schälen mit Hilfe der Schäleinrichtung (102) die Dicke des flächenförmigen Verbunds (206) um 50% verringert, dadurch dass die Polymeraußenschicht (201), und ein Teil der Verbundträgerschicht (202) verringert werden. Das Schälen erfolgt bei einer Geschwindigkeit von 450 m/min. In Verfahrensschritt d) 304 wird der erste Verbundrandbereich (204) bei einer Geschwindigkeit von 450m/min auf eine Temperatur von 140°C erhitzt, wobei die Temperatur T1 (403) des Heißgases (444) an der Austrittsöffnung (401) der Erhitzungseinrichtung (103) 480°C beträgt und die Temperatur Tn (402) des Heißgases (444) an der Austrittsöffnung (401) der Erhitzungseinrichtung (103) stromab der Temperatur T1 (403) 440°C beträgt. In einem Verfahrensschritt d)1 (306) wird die aufgeschmolzene Verbundkunststoffschicht (203) mit Hilfe der Ionisierungseinrichtung (106) in Form einer Plasmadüse der Fa. Plasmatreat GmbH, Steinhagen, Deutschland, ionisiert. In einem Verfahrensschritt e) 305 werden der erste Verbundrandbereich (204) und der zweite Verbundrandbereich (205) aufeinander gepresst und miteinander versiegelt. Somit wird eine Längsnaht (1001) erzeugt, wodurch aus dem gefalteten flächenförmigen Verbund (200) ein mantelförmiger Verpackungsvorläufer (1000) für einen einzelnen Behälter (1200) entsteht.

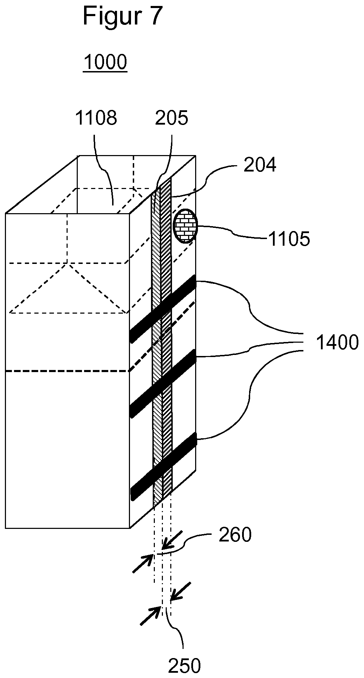

Figur 7 zeigt eine schematische Darstellung eines mantelförmigen Verpackungsvorläufers (1000), der durch ein Überlappen des ersten Verbundrandbereichs (204) und des zweiten Verbundrandbereich (205) in einen ersten Überlappungsbereich (250) und einen zweiten Überlappungsbereich (260) aus einem flächenförmigen Verbund (200) ausgebildet worden ist. Der erste Überlappungsbereich (250) und der zweite Überlappungsbereich (260) bilden eine Längsnaht des Verpackungsvorläufers. Der Verpackungsvorläufer ist durch Falten an 4 Faltstellen aus dem flächenförmigen Verbund gebildet. Der Verpackungsvorläufer umgibt einen Innenraum (1108). Die Breite des ersten Überlappungsbereichs (250) beträgt 7 mm. Die Breite des zweiten Überlappungsbereichs (260) beträgt 6 mm. Weiterhin enthält die Verbundträgerschicht (202) ein überbeschichtetes Loch (1105). Zudem sind die Bereiche für die Entnahme der Probe zur Messung der Nahtfestigkeit (1400) nach der vorstehend angegeben Testmethode dargestellt.

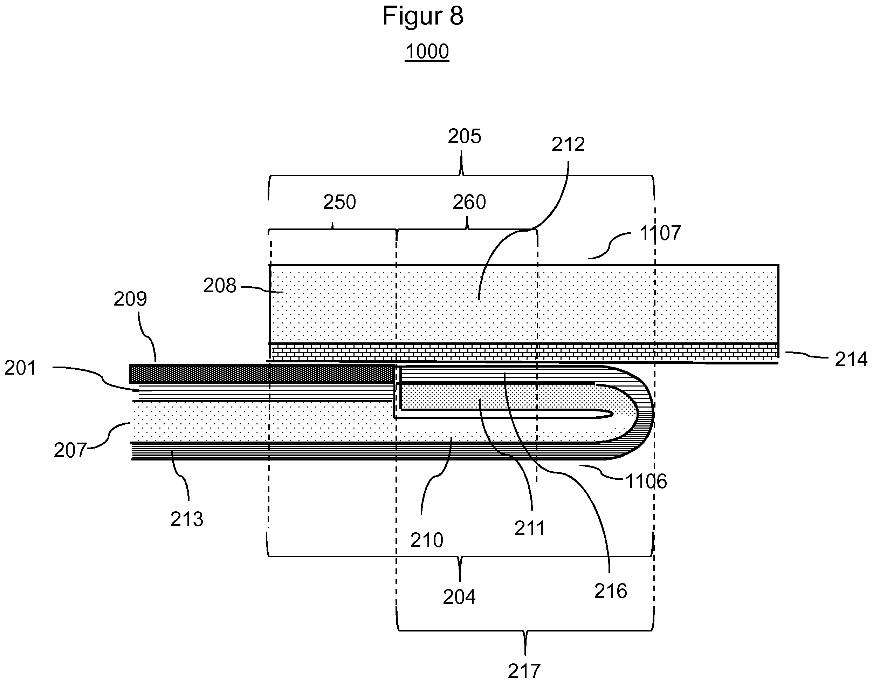

Figur 8 zeigt eine schematische Querschnittsdarstellung eines Ausschnitts des ersten Überlappungsbereichs (250) und des zweiten Überlappungsbereichs (260) eines Verpackungsvorläufers (1000), wie in Figur 7 dargestellt, hergestellt aus einem flächenförmigen Verbund (200). Hierbei befindet sich der Innenraum (1108) unterhalb des ersten und zweiten Überlappungsbereichs. Der erste Überlappungsbereich (250) und der zweite Überlappungsbereich (260) grenzen aneinander an. Der erste Überlappungsbereich (250) beinhaltet eine Schichtfolge von einer Innenoberfläche (1106) zu einer Außenoberfläche (1107) miteinander verbundener Schichten, eine erste Verbundkunststoffschicht (213), eine erste Verbundträgerschicht (207), eine Polymeraußenschicht (201), eine Verbundfarbschicht (209), eine zweite Verbundkunststoffschicht (214) und eine zweite Verbundträgerschicht (208). In dem ersten Überlappungsbereich (250) sind alle überlagerten Schichten miteinander verbunden.

Der zweite Überlappungsbereich (260) beinhaltet eine Schichtfolge von einer Innenoberfläche (1106) zu einer Außenoberfläche (1107) miteinander verbundener Schichten, eine erste Verbundkunststoffschicht (213), eine erste Verbundträgerschicht (210), eine zweite Verbundträgerschicht (211), wobei die erste Verbundträgerschicht (210) und die zweite Verbundträgerschicht (211) durch ein Schälen und ein Falten aus der ersten Verbundträgerschicht (207) bereitgestellt worden sind, eine dritte Verbundkunststoffschicht (216), eine zweite Verbundkunststoffschicht (214) und eine dritte Verbundträgerschicht (212). In dem zweiten Überlappungsbereich (260) ist die erste Verbundträgerschicht (210) mit der zweiten Verbundträgerschicht (211) nicht verbunden. Zudem hat im zweiten Überlappungsbereich (260) die dritte Verbundträgerschicht (212) eine größere Schichtdicke als jeweils die erste Verbundträgerschicht (210) und die zweite Verbundträgerschicht (211). Die Schichtdicke der ersten Verbundträgerschicht (210) und der zweiten Verbundträgerschicht (211) im zweiten Überlappungsbereich (260) beträgt 60 % der Schichtdicke der dritten Verbundträgerschicht (212) im zweiten Überlappungsbereich (260).

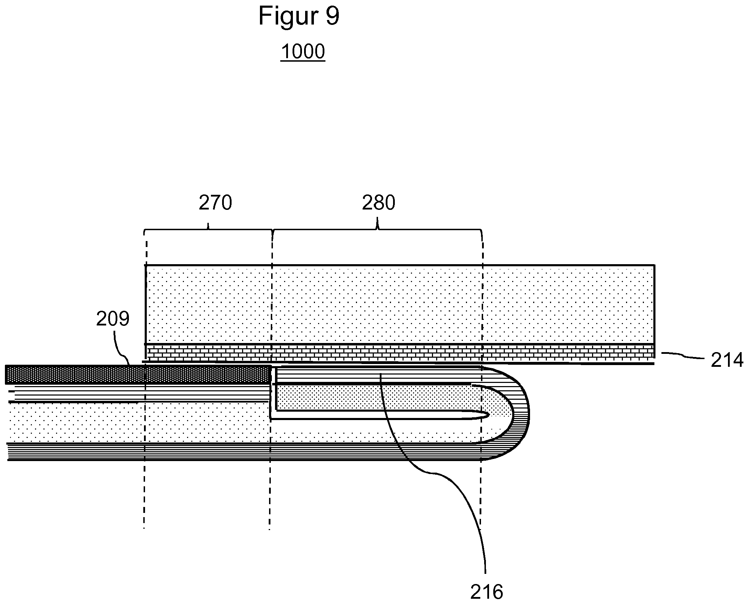

Figur 9 zeigt den schematischen Querschnittsdarstellung eines Ausschnitts eines Verpackungsvorläufers (1000), wie in Figur 8 dargestellt, hergestellt aus einem flächenförmigen Verbund (200). Die Außensiegelung (270) erfolgt zwischen Verbundfarbschicht (209) und der zweiten Verbundkunststoffschicht (214). Die Innensiegelung (270) erfolgt zwischen der dritten Verbundkunststoffschicht (216) und der zweiten Verbundkunststoffschicht (214).

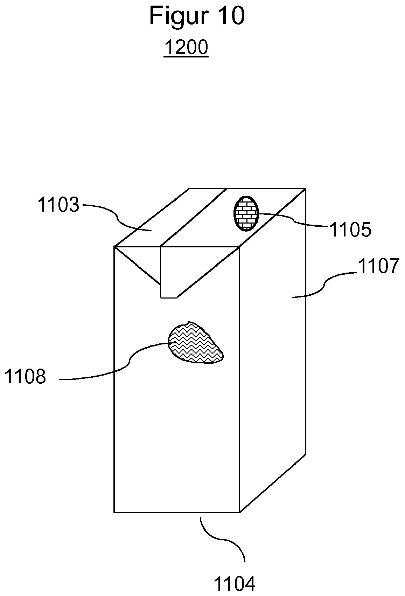

Figur 10 zeigt einen geschlossenen Behälter 1200. Der geschlossene Behälter 1200 wurde erhalten durch ein Falten und Verschließen des Verpackungsvorläufers aus Figur 7. Ein Verschließen erfolgte durch ein Siegeln des Bodenbereichs (1104) mit Heißluft und des Kopfbereichs (1103) mit Ultraschall in einer Füllmaschine (CFA712, SIG Combibloc, Deutschland). Zwischen dem Siegeln des Bodenbereichs mit Heißluft und dem Verschließen des Kopfbereichs mit Ultraschall wird der Behälter in einer Aseptikzone mit einem Nahrungsmittel gefüllt. Anschließend wird der geschlossene Behälter 1200 mit einer Öffnungshilfe 1202 auf der Außenoberfläche (1107) versehen. Hierbei überdeckt ein Deckel der Öffnungshilfe (1202) das Loch (1105).

### LISTE DER BEZUGSZEICHEN

- **100**: erfindungsgemäße Vorrichtung
- **101**: Transporteinrichtung
- **102**: Schäleinrichtung
- **103**: erste Erhitzungseinrichtung
- **104**: Kontaktierungseinrichtung
- **105**: Vereinzelungseinrichtung
- **106**: Ionisierungseinrichtung
- **108**: weitere Erhitzungseinrichtung
- **111**: Transportoberfläche
- **200**: flächenförmiger Verbund
- **201**: Polymeraußenschicht
- **202**: Verbundträgerschicht
- **203**: Verbundkunststoffschicht
- **204**: erster Verbundrandbereich
- **205**: zweiter Verbundrandbereich
- **206**: Dicke des flächenförmigen Verbunds
- **207**: erste Verbundträgerschicht im ersten Überlappungsbereich (250)
- **208**: zweite Verbundträgerschicht im ersten Überlappungsbereich (250)
- **209**: Verbundfarbschicht
- **210**: erste Verbundträgerschicht im zweiten Überlappungsbereich (260)
- **211**: zweite Verbundträgerschicht im zweiten Überlappungsbereich (260)
- **212**: dritte Verbundträgerschicht im zweiten Überlappungsbereich (260)
- **213**: erste Verbundkunststoffschicht
- **214**: zweite Verbundkunststoffschicht
- **215**: Barriereschicht
- **216**: dritte Verbundkunststoffschicht im zweiten Überlappungsbereich (260)
- **217**: Teilbereich des ersten Verbundrandbereichs
- **250**: erster Überlappungsbereich
- **260**: zweiter Überlappungsbereich
- **270**: Außensiegelung
- **280**: Innensiegelung
- **300**: erfindungsgemäßes Verfahren zum Herstellen eines flächenförmigen Verbunds
- **301**: Verfahrensschritt a)
- **302**: Verfahrensschritt b)
- **303**: Verfahrensschritt c)
- **304**: Verfahrensschritt d)
- **305**: Verfahrensschritt e)
- **306**: Verfahrensschritt d) 1
- **401**: Austrittsöffnungen
- **402**: Eintrittsöffnung
- **403**: Temperatur T1
- **404**: Temperatur Tn
- **405**: Abstand zwischen Austrittsöffnungen und flächenförmigen Verbund
- **406**: Energieabgabesegmente
- **407**: Erstes Energieabgabesegment
- **408**: Letztes Energieabgabesegment
- **409**: Länge des Energieabgabesegments
- **410**: Innenquerschnittsfläche des Eintrittsöffnung
- **411**: Summe der Innenquerschnittsflächen der Energieabgabesegmente
- **412**: Breite des Energieabgabesegments
- **444**: Heißgas
- **445**: Heißluft
- **1000**: Verpackungsvorläufer
- **1001**: Längsnaht
- **1102**: Rillungen
- **1103**: Kopfbereich
- **1104**: Bodenbereich
- **1105**: Loch
- **1106**: Innenoberfläche des flächenförmigen Verbundes
- **1107**: Außenoberfläche des flächenförmigen Verbundes
- **1108**: Innenraum
- **1200**: Behälter
- **1201**: Nahrungsmittel
- **1202**: Öffnungshilfe
- **1300**: Stromrichtung
- **1400**: Probe für Nahtfestigkeitsmessung

## Patentansprüche

1. Eine Vorrichtung (100) zur Herstellung eines Verpackungsvorläufers (1000), wobei der Verpackungsvorläufer (1000) zu mindestens 80 Gew.-%, bezogen auf den Verpackungsvorläufer (1000), aus einem flächenförmigen Verbund (200) besteht, wobei der Verbund (200) beinhaltet:
i. eine Verbundkunststoffschicht (203),
ii. eine Verbundträgerschicht (202),
iii. einen ersten Verbundrandbereich (204),
iv. einen zweiten Verbundrandbereich (205),
wobei die Vorrichtung (100) als Vorrichtungsbestandteile entlang einer Stromrichtung (1300) beinhaltet:
a) eine ebene Transporteinrichtung (101) ausgebildet zum Transportieren des ebenen flächenförmigen Verbunds (200), wobei die Transporteinrichtung (101) eine Transportoberfläche (111), ausgebildet zum Tragen des Verbunds (200) beinhaltet; stromab davon
b) eine erste Erhitzungseinrichtung (103) ausgebildet zum Erhitzen des ersten Verbundrandbereichs (204), wobei die erste Erhitzungseinrichtung (103) Energieabgabesegmente (406) beinhaltet; stromab davon
c) eine Kontaktierungseinrichtung (104) ausgebildet zum Verbinden des ersten Verbundrandbereichs (204) mit dem zweiten Verbundrandbereich (205);
wobei die erste Erhitzungseinrichtung (103) zur Abgabe von Energie entlang der Stromrichtung (1300) ausgebildet ist;
wobei die erste Erhitzungseinrichtung (103) entlang der Stromrichtung (1300) ein erstes Energieabgabesegment (407) und entlang der Stromrichtung (1300) ein am weitesten von dem ersten Energieabgabesegment (407) entferntes letztes Energieabgabesegment (408) beinhaltet;
**dadurch gekennzeichnet, dass** das erste Energieabgabesegment (407) zur Abgabe einer höheren Heizleistung als das letzte Energieabgabesegment (408) ausgebildet ist.

2. Die Vorrichtung (100) nach dem vorhergehenden Anspruch, wobei die erste Erhitzungseinrichtung (103) eine gasdurchströmbare Eintrittsöffnung (402) beinhaltet;
wobei mindestens eines der folgenden Kriterien erfüllt ist:
a) die Eintrittsöffnung (402) gegenüber der Energieabgabesegmente (406) vorgesehen ist;
b) die Eintrittsöffnung (402) mit geringerem Abstand zu dem ersten Energieabgabesegment (407) als zu dem letzten Energieabgabesegment (408) vorgesehen ist;
c) die Eintrittsöffnung (402) eine größere Innenquerschnittsfläche (410) als die Summe der Innenquerschnittsflächen (411) aller Energieabgabesegmente (406) besitzt.

3. Die Vorrichtung (100) nach einem der vorhergehenden Ansprüche, wobei der Abstand (405) zwischen Austrittsöffnung (401) und der Transportoberfläche (111) höchstens so groß ist wie die Länge (409) der Austrittsöffnungen (401) in Stromrichtung (1300).

4. Die Vorrichtung (100) nach einem der vorhergehenden Ansprüche, wobei diese den flächenförmigen Verbund (200) beinhaltet.

5. Ein Verfahren (300) zur Herstellung eines Verpackungsvorläufers (1000), wobei der Verpackungsvorläufer (1000) zu mindestens 80 Gew.-%, bezogen auf den Verpackungsvorläufer (1000), aus einem flächenförmigen Verbund (200) besteht, das Verfahren (300) beinhaltend als Verfahrensschritte,
a) Bereitstellen des flächenförmigen Verbunds (200), beinhaltend
i. eine Verbundkunststoffschicht (203),
ii. eine Verbundträgerschicht (202),
iii. einen ersten Verbundrandbereich (204),
iv. einen zweiten Verbundrandbereich (205),
b) Beschleunigen des flächenförmigen Verbunds (200);
d) Erhitzen des ersten Verbundrandbereichs (204);
e) Verbinden des ersten Verbundrandbereichs (204) mit dem zweiter Verbundrandbereich (205),
wobei das Verfahren (300) in einer Vorrichtung (100) durchgeführt wird, die als Vorrichtungsbestandteile entlang einer Stromrichtung (1300) beinhaltet:
a. eine ebene Transporteinrichtung (101) ausgebildet zum Transportieren des ebenen flächenförmigen Verbunds (200), wobei die Transporteinrichtung (101) eine Transportoberfläche (111), ausgebildet zum Tragen des Verbunds (200) beinhaltet; stromab davon
b. eine erste Erhitzungseinrichtung (103) ausgebildet zum Erhitzen des ersten Verbundrandbereichs (204), wobei die erste Erhitzungseinrichtung (103) Energieabgabesegmente (406) beinhaltet; stromab davon
c. eine Kontaktierungseinrichtung (104) ausgebildet zum Verbinden des ersten Verbundrandbereichs (204) mit dem zweiten Verbundrandbereich (205);
wobei die erste Erhitzungseinrichtung (103) zur Abgabe von Energie entlang der Stromrichtung (1300) ausgebildet ist;
wobei die erste Erhitzungseinrichtung (103) entlang der Stromrichtung (1300) ein erstes Energieabgabesegment (407) und entlang der Stromrichtung (1300) ein am weitesten von dem ersten Energieabgabesegment (407) entferntes letztes Energieabgabesegment (408) beinhaltet;
wobei in Verfahrensschritt d) (304) in einem Bereich zwischen der Transportoberfläche (111) und dem ersten Energieabgabesegment (407) eine erste Temperatur T1 (403) und in einem weiteren Bereich zwischen der Transportoberfläche (111) und dem letzten Energieabgabesegment (408) eine zweite Temperatur Tn (404) ist;
**dadurch gekennzeichnet, dass** die erste Temperatur T1 (403) größer als die zweite Temperatur Tn (404) ist.

6. Das Verfahren nach Anspruch 5, wobei der Verfahrensschritt d) (304) ein Erhitzen durch thermische Konvektion beinhaltet.

7. Das Verfahren nach einem der Ansprüche 5 oder 6, wobei in Verfahrensschritt d) (304) ein gasförmiger Wärmestrom (444) an einer Austrittsöffnung (401) der ersten Erhitzungseinrichtung (103) eine größere Strömungsgeschwindigkeit hat als an der Eintrittsöffnung (402) der ersten Erhitzungseinrichtung (103).

8. Das Verfahren nach einem der Ansprüche 5 bis 7, wobei in Verfahrensschritt c) (303) die Dicke (206) des flächenförmigen Verbunds (200) mindestens in einem Teilbereich des ersten Verbundrandbereichs (204) um mehr als 40 % der Dicke (206) des flächenförmigen Verbunds (200) verringert wird.

9. Eine Verwendung einer Vorrichtung (100) nach einem der Ansprüche 1 bis 4 zur Herstellung eines Verpackungsvorläufers (1000), insbesondere eines Verpackungsvorläufers zum Verpacken von Nahrungsmitteln.

## Claims

1. An apparatus (100) for producing a packaging precursor (1000), wherein the packaging precursor (1000) comprises at least 80% by weight, based on the packaging precursor (1000), of a sheet-like composite (200), the composite (200) comprising:
i. a composite plastic layer (203),
ii. a composite support layer (202),
iii. a first composite edge region (204),
iv. a second composite edge region (205),
wherein the device (100) includes as device components along a flow direction (1300):
a) a planar transport means (101) adapted to transport the planar sheet-like composite (200), the transport means (101) including a transport surface (111) adapted to support the composite (200); downstream thereof
b) a first heating means (103) adapted to heat said first composite edge portion (204), said first heating means (103) including energy dissipating segments (406); downstream thereof
c) a contacting means (104) adapted to connect the first composite edge portion (204) to the second composite edge portion (205);
wherein the first heating means (103) is adapted to deliver energy along the current direction (1300);
wherein the first heating means (103) includes a first energy output segment (407) along the direction of flow (1300) and a last energy output segment (408) along the direction of flow (1300) furthest from the first energy output segment (407); **characterized in that** the first energy output segment (407) is configured to output a higher heat
output than the last energy output segment (408).

2. The apparatus (100) according to the preceding claim, wherein the first heating means (103) includes a gas flowable inlet port (402); wherein at least one of the following criteria is satisfied:
a) the inlet opening (402) is provided opposite the energy delivery segment (406);
b) the inlet opening (402) is provided at a smaller distance from the first energy output segment (407) than from the last energy output segment (408);
c) the inlet opening (402) has a larger internal cross-sectional area (410) than the sum of the internal cross-sectional areas (411) of all the energy delivery segments (406).

3. The device (100) according to any one of the preceding claims, wherein the distance (405) between the outlet opening (401) and the transport surface (111) is at most as great as the length (409) of the outlet openings (401) in the flow direction (1300).

4. The device (100) according to any one of the preceding claims, wherein it comprises the sheet-like composite (200).

5. A method (300) of manufacturing a packaging precursor (1000), wherein the packaging precursor (1000) comprises at least 80% by weight, based on the packaging precursor (1000), of a sheet-like composite (200),
comprising the process (300) as process steps,
a) Providing the sheet-like composite (200), comprising
i. a composite plastic layer (203),
ii. a composite support layer (202),
iii. a first composite edge region (204),
iv. a second composite edge region (205),
b) Acceleration of the laminar composite (200);
d) Heating the first composite edge region (204);
e) Connecting the first composite edge portion (204) to the second composite edge portion (205),
wherein the method (300) is performed in a device (100) comprising as device components along a flow direction (1300):
a. a planar transport means (101) adapted to transport the planar sheet-like composite (200), the transport means (101) including a transport surface (111) adapted to support the composite (200); downstream thereof
b. a first heating means (103) adapted to heat said first composite edge portion (204), said first heating means (103) including energy dissipating segments (406); downstream thereof
c. a contacting means (104) adapted to connect the first composite edge portion (204) to the second composite edge portion (205);
wherein the first heating means (103) is adapted to deliver energy along the current direction (1300);
wherein the first heating means (103) includes a first energy output segment (407) along the direction of flow (1300) and a last energy output segment (408) along the direction of flow (1300) furthest from the first energy output segment (407);
wherein in method step d) (304) in a region between the transport surface (111) and the first energy delivery segment (407) is a first temperature T1 (403) and in a further region between the transport surface (111) and the last energy delivery segment (408) is a second temperature Tn (404);
**characterized in that** the first temperature T1 (403) is greater than the second temperature Tn (404).

6. The method according to claim 5, wherein the method step d) (304) comprises heating by thermal convection.

7. The method according to any one of claims 5 or 6, wherein in method step d) (304) a gaseous heat flow (444) at an outlet opening (401) of the first heating device (103) has a greater flow velocity than at the inlet opening (402) of the first heating device (103).

8. The method according to any one of claims 5 to 7, wherein in method step c) (303) the thickness (206) of the sheet-like composite (200) is reduced by more than 40% of the thickness (206) of the sheet-like composite (200) at least in a sub-region of the first composite edge region (204).

9. A use of an apparatus (100) according to any one of claims 1 to 4 for producing a packaging precursor (1000), in particular a packaging precursor for packaging food products.

## Revendications

1. Appareil (100) pour produire un précurseur d'emballage (1000), dans lequel le précurseur d'emballage (1000) comprend au moins 80 % en poids, sur la base du précurseur d'emballage (1000), d'un composite en forme de feuille (200), le composite (200) comprenant :
i. une couche de plastique composite (203),
ii. une couche de support composite (202),
iii. une première région de bord composite (204),
iv. une seconde région de bord composite (205),
dans lequel le dispositif (100) comprend comme composants du dispositif le long d'une direction d'écoulement (1300) :
a) un moyen de transport planaire (101) adapté pour transporter le composite planaire en forme de feuille (200), le moyen de transport (101) comprenant une surface de transport (111) adaptée pour supporter le composite (200) ; en aval de celui-ci
b) un premier moyen de chauffage (103) adapté pour chauffer ladite première partie de bord composite (204), ledit premier moyen de chauffage (103) comprenant des segments de dissipation d'énergie (406) ; en aval de celui-ci
c) un moyen de mise en contact (104) adapté pour connecter la première partie de bord composite (204) à la seconde partie de bord composite (205) ;
dans lequel le premier moyen de chauffage (103) est adapté pour délivrer de l'énergie le long de la direction du courant (1300) ;
dans lequel le premier moyen de chauffage (103) comprend un premier segment de sortie d'énergie (407) le long de la direction d'écoulement (1300) et un dernier segment de sortie d'énergie (408) le long de la direction d'écoulement (1300) le plus éloigné du premier segment de sortie d'énergie (407) ;
**caractérisé en ce que** le premier segment de sortie d'énergie (407) est configuré pour sortir une sortie de chaleur plus élevée que le dernier segment de sortie d'énergie (408).

2. Appareil (100) selon la revendication précédente, dans lequel le premier moyen de chauffage (103) comprend un orifice d'entrée de gaz pouvant s'écouler (402) ; dans lequel au moins un des critères suivants est satisfait :
a) l'ouverture d'entrée (402) est prévue en face du segment de fourniture d'énergie (406) ;
b) l'ouverture d'entrée (402) est prévue à une distance plus petite du premier segment de sortie d'énergie (407) que du dernier segment de sortie d'énergie (408) ;
c) l'ouverture d'entrée (402) a une surface de section transversale interne (410) plus grande que la somme des surfaces de section transversale interne (411) de tous les segments de fourniture d'énergie (406).

3. Dispositif (100) selon l'une quelconque des revendications précédentes, dans lequel la distance (405) entre l'ouverture de sortie (401) et la surface de transport (111) est au plus égale à la longueur (409) des ouvertures de sortie (401) dans le sens de l'écoulement (1300).

4. Dispositif (100) selon l'une quelconque des revendications précédentes, dans lequel il comprend le composite en forme de feuille (200).

5. Procédé (300) de fabrication d'un précurseur d'emballage (1000), dans lequel le précurseur d'emballage (1000) comprend au moins 80 % en poids, par rapport au précurseur d'emballage (1000), d'un composite en forme de feuille (200),
comprenant le procédé (300) en tant qu'étapes du procédé,
a) Fournir le composite en forme de feuille (200), comprenant
i. une couche de plastique composite (203),
ii. une couche de support composite (202),
iii. une première région de bord composite (204),
iv. une seconde région de bord composite (205),
b) Accélération du composite en forme de feuille (200) ;
d) Chauffer la première région de bord composite (204) ;
e) Relier la première partie de bord composite (204) à la seconde partie de bord composite (205),
dans lequel le procédé (300) est exécuté dans un dispositif (100) comprenant comme composants de dispositif le long d'une direction d'écoulement (1300) :
a. un moyen de transport planaire (101) adapté pour transporter le composite planaire en forme de feuille (200), le moyen de transport (101) comprenant une surface de transport (111) adaptée pour supporter le composite (200) ; en aval de celui-ci
b. un premier moyen de chauffage (103) adapté pour chauffer ladite première partie de bord composite (204), ledit premier moyen de chauffage (103) comprenant des segments de dissipation d'énergie (406) ; en aval de celui-ci
c. un moyen de mise en contact (104) adapté pour connecter la première partie de bord composite (204) à la seconde partie de bord composite (205) ;
dans lequel le premier moyen de chauffage (103) est adapté pour délivrer de l'énergie le long de la direction du courant (1300) ;
dans lequel le premier moyen de chauffage (103) comprend un premier segment de sortie d'énergie (407) le long de la direction d'écoulement (1300) et un dernier segment de sortie d'énergie (408) le long de la direction d'écoulement (1300) le plus éloigné du premier segment de sortie d'énergie (407) ;
dans lequel, dans l'étape de procédé d) (304), dans une région entre la surface de transport (111) et le premier segment de fourniture d'énergie (407) se trouve une première température T1 (403) et dans une autre région entre la surface de transport (111) et le dernier segment de fourniture d'énergie (408) se trouve une seconde température Tn (404) ;
**caractérisé en ce que** la première température T1 (403) est supérieure à la seconde température Tn (404).

6. Procédé selon la revendication 5, dans lequel l'étape d) (304) du procédé comprend un chauffage par convection thermique.

7. Procédé selon l'une quelconque des revendications 5 ou 6, dans lequel, lors de l'étape d) (304) du procédé, un flux thermique gazeux (444) au niveau d'une ouverture de sortie (401) du premier dispositif de chauffage (103) a une vitesse d'écoulement supérieure à celle de l'ouverture d'entrée (402) du premier dispositif de chauffage (103).

8. Procédé selon l'une quelconque des revendications 5 à 7, dans lequel lors de l'étape c) (303) du procédé, l'épaisseur (206) du composite en forme de feuille (200) est réduite de plus de 40% de l'épaisseur (206) du composite en forme de feuille (200) au moins dans une sous-région de la première région de bord composite (204).

9. Utilisation d'un appareil (100) selon l'une quelconque des revendications 1 à 4 pour produire un précurseur d'emballage (1000), en particulier un précurseur d'emballage pour l'emballage de produits alimentaires.
